# EUROPEAN PATENT SPECIFICATION

(11) **EP 3 685 549 B1**
(45) Date of publication and mention of the grant of the patent: **14.02.2024**
(21) Application number: 18864951.1
(22) Date of filing: 08.10.2018
(51) Int. Cl.: H04L 41/18, H04L 41/5006, H04L 41/5041, H04L 41/5051

(54) **INTERACTION BETWEEN 5G AND NON-5G MANAGEMENT FUNCTION ENTITIES**
INTERAKTION ZWISCHEN 5G- UND NICHT-5G-VERWALTUNGSFUNKTIONSEINHEITEN
INTERACTION ENTRE DES ENTITÉS DE FONCTION DE GESTION 5G ET NON -5 G

(30) Priority: 06.10.2017 US 201762569182 P; 28.09.2018 US 201816147178
(43) Date of publication of application: 29.07.2020
(73) Proprietor: Huawei Technologies Co., Ltd., Longgang District Shenzhen, Guangdong 518129 (CN)
(72) Inventor: SENARATH, Nimal Gamini, Ottawa, Ontario K2G 6P5 (CA); LIANG, Chengchao, Ottawa, Ontario K2J 5R6 (CA); ZHANG, Hang, Nepean, Ontario K2G 5Z1 (CA)
(74) Representative: Pfenning, Meinig & Partner mbB
(86) International application number: PCT/CN2018/109284
(87) International publication number: WO 2019/068258

(56) References cited:
- CN-A- 107 040 481
- CN-A- 107 113 195
- US-A1- 2013 198 324
- US-A1- 2017 053 342
- "3rd Generation Partnership Project; Technical Specification Group Services and System Aspects; Telecommunication management; Study on management and orchestration of network slicing for next generation network (Release 15)", 3GPP STANDARD ; TECHNICAL REPORT ; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V15.0.0, 25 September 2017 (2017-09-25), pages 1-78, XP051337191, [retrieved on 2017-09-25]
- HUAWEI: "Add potential solution of limited level of management exposure for network slicing", 3GPP DRAFT; S5-173164 PCR 28.801 ADD POTENTIAL SOLUTION OF LIMITED LEVEL OF MANAGEMENT EXPOSURE FOR NETWORK SLICING, 3RD GENERATION PARTNERSHIP PROJECT (3GPP), MOBILE COMPETENCE CENTRE ; 650, ROUTE DE , vol. SA WG5, no. West Palm Beach (US); 20170508 - 20170512 7 May 2017 (2017-05-07), XP051260070, Retrieved from the Internet: URL:http://www.3gpp.org/ftp/Meetings_3GPP_ SYNC/SA5/Docs/ [retrieved on 2017-05-07]
- HUAWEI: "pCR 28.800 Interfaces for service management", 3GPP DRAFT; S5-174465 PCR 28.800 INTERFACES FOR SERVICE MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. SA WG5, no. Sophia Antipolis, France; 20170821 - 20170825 25 August 2017 (2017-08-25), XP051336387, Retrieved from the Internet: URL:http://www.3gpp.org/ftp/tsg_sa/WG5_TM/ TSGS5_114/Docs/ [retrieved on 2017-08-25]
- HUAWEI: "Potential solution options for creating slices across multiple operators", 3GPP DRAFT; S5A-170240 PCR TR 28.801 ADD POTENTIAL SOLUTION OPTIONS FOR CREATING SLICES ACROSS MULTIPLE OPERATORS, 3RD GENERATION PARTNERSHIP PROJECT (3GPP), MOBILE COMPETENCE CENTRE ; 650, ROUTE DES , vol. SA WG5, no. Munich; 20160213 - 20160217 17 February 2017 (2017-02-17), XP051241111, Retrieved from the Internet: URL:http://www.3gpp.org/ftp/tsg_sa/WG5_TM/ TSGS5_111_Bis/Docs/ [retrieved on 2017-02-17]
- 3GPP: "Study on management and orchestration of network slicing for next generation network", 3GPP TR 28.801 V15.0.0, 30 September 2017 (2017-09-30), pages 30-50, XP055587887,

## Description

### FIELD OF THE INVENTION

The present disclosure pertains to the field of communications networks, and in particular to interaction between 5G and non-5G management function (MF) entities.

### BACKGROUND

Modern approaches to network communications have included concepts of providing offerings of telecommunication services as to customer. Indeed, the Third Generation Partnership Project (3GPP) Technical Reference (TR) 28.801 has proposed the introduction of a number of such service offerings, notably Communication as a Service (CaaS), Network Slice as a Service (NSaaS), Network Slice Subnet as a Service (NSSaaS) and Infrastructure as a Service (laaS). These service offerings employ a concept known as network slicing, in which pooled network resources are used to create a series of network slices. Within each slice, one or more existing network nodes are instantiated with those network functions (NFs) that provide a dynamic service level capability for a particular slice.

The use of network slices permits only those NFs that are appropriate, to be instantiated, and only as and when appropriate. In some examples, the NF can be located in the control plane (CP). In some examples, the NF can be located in the user plane (UP). In some examples, the NF can be located in the management plane (MP).

In order to provision these four types of telecommunication services, it would be beneficial to identify new network management functions (MFs) for supporting each service, as well as new interfaces for the various network MFs (NMFs). Further, it would be beneficial to identify new interfaces that allow such services to access non-3GPP and non-5G network management system capabilities.
3GPP TR 28.801 relates to study on management and orchestration of network slicing.
3GPP DRAFT S5-173164 relates to potential solution of limited level of management exposure for network slicing.

### SUMMARY

The invention is set out in the appended set of claims. An object of aspects of the present disclosure is to provide techniques for management of network slices and associated services.

An aspect of the present disclosure provides a method of providing telecommunication communication services to a customer, according to independent claim 1.

In any preceding aspect, the agreement can be negotiated with the customer by a network service MF (SMF). In an embodiment, the network SMF can receive directions from a BSS network MF as to the terms of the service offering.

In any preceding aspect, the step of creating can comprise creating an SMF to SMF interface between the network SMF and an SMF of the customer. In an embodiment, the SMF to SMF interface can comprise at least one of a template request interface and a service requirement interface. In an embodiment, the SMF to SMF template request interface can specify at least one service offering selected from a group consisting of CaaS, NSaaS, NSSaaS and laaS.

In any preceding aspect, the step of creating can comprise creating an SMF to network MF interface between the network SMF and the network MF. In an embodiment, the SMF to network MF interface can comprise at least one of a template request interface, a service requirement interface, a network requirement interface and a resource management interface.

In any preceding aspect, the step of creating can comprise creating an interface between the network MF and another MF to support at least one of RM management and a LM function.

In any preceding aspect, the step of creating can comprise creating an interface between an NSMF and at least one of an EM MF, a DM MF and a MANO MF. In an embodiment, the exposed at least one interface can perform interface conversion between the NSMF and the at least one of the EM MF, DM MF and MANO MF.

An aspect of the present disclosure provides a network MF of a telecommunications service provider according to independent claim 12, and another aspect provides a computer-readable medium comprising instructions according to independent claim 13.

### BRIEF DESCRIPTION OF THE FIGURES

Further features and advantages of the present disclosure will become apparent from the following detailed description, taken in combination with the appended drawings, in which:
FIG. 1 is a block diagram of an electronic device within a computing and communications environment that may be used for implementing devices and methods in accordance with representative embodiments of the present disclosure;
FIG. 2 is a block diagram illustrating a logical platform under which an Electronic Device can provide virtualization services;
FIG. 3A is a block diagram schematically illustrating an example architecture in which network slicing can be implemented;
FIG. 3B is a block diagram illustrating the architecture discussed in FIG. 3A from the perspective of a single slice;
FIG. 4 is a block diagram illustrating an example ETSI NFV MANO-compliant management and orchestration service;
FIG. 5A is a block diagram illustrating an embodiment of network- and customer-side MFs to support a Communications as a Service (CaaS) offering;
FIG. 5B is a block diagram illustrating an embodiment of network- and customer-side MFs to support a Network Slice as a Service (NSaaS) offering;
FIG. 5C is a block diagram illustrating an embodiment of network- and customer-side MFs to support a Network Slice Subnet as a Service (NSSaaS) offering;
FIG. 5D is a block diagram illustrating an embodiment of network- and customer-side MFs to support an Infrastructure as a Service (laaS) offering.
FIG. 6 is a block diagram illustrating the block diagram of FIG. 5A in greater detail, showing network-side MFs and their interconnectivity to support communication services;
FIG. 7 is a block diagram illustrating the block diagram of FIG. 5B in greater detail, showing network-side MFs and their interconnectivity to support an NSaaS offering;
FIG. 8 is a block diagram illustrating relationships between the block diagram of FIG. 5C in greater detail, showing network-side MFs MFs and their interconnectivity an NSSaaS offering;
FIG. 9 is a block diagram illustrating relationships between the block diagram of FIG. 5D in greater detail, showing network-side MFs MFs and their interconnectivity an laaS offering; and
FIG. 10 is a flow chart showing method actions according to an embodiment.

It will be noted that throughout the appended drawings, like features are identified by like reference numerals.

### DETAILED DESCRIPTION

In the following description, features of the present disclosure are described by way of embodiments. For convenience of description, these embodiments make use of features and terminology known from 4G and 5G networks as defined by the Third Generation Partnership Project (3GPP). However, it shall be understood that the present disclosure is not limited to such networks. Rather, methods and systems in accordance with the present disclosure may be implemented in any network in which a mobile device may connect to the network through at least one access point, and subsequently be handed-over to at least one other access point during the course of a communications session.

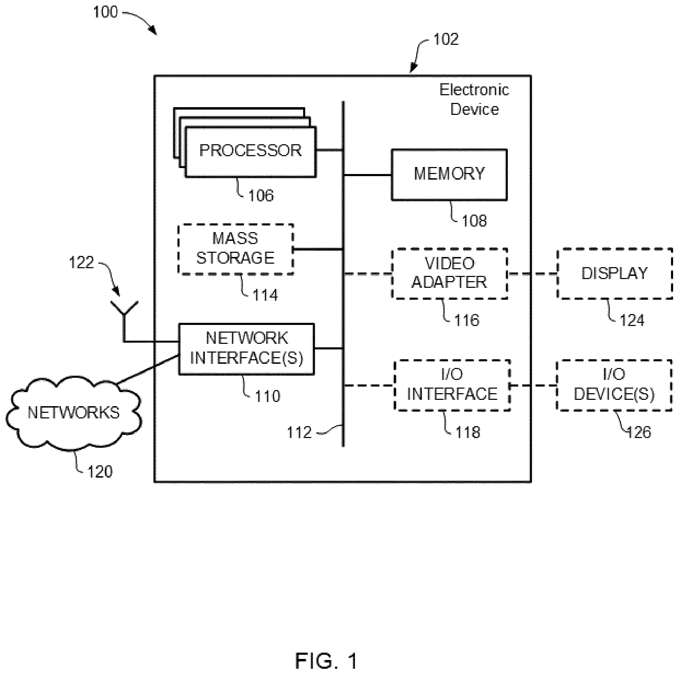

FIG. 1 is a block diagram of an electronic device (ED) 102 illustrated within a computing and communications environment 100 that may be used for implementing the devices and methods disclosed herein. In some embodiments, the electronic device 102 may be an element of communications network infrastructure, such as a base station (for example a NodeB, an enhanced Node B (eNodeB), a next generation NodeB (sometimes referred to as a gNodeB or gNB), a home subscriber server (HSS), a gateway (GW) such as a packet gateway (PGW) or a serving gateway (SGW) or various other nodes or functions within an evolved packet core (EPC) network. In other embodiments, the electronic device 2 may be a device that connects to network infrastructure over a radio interface, such as a mobile phone, smart phone or other such device that may be classified as a User Equipment (UE). In some embodiments, ED 102 may be a Machine Type Communications (MTC) device (also referred to as a machine-to-machine (m2m) device), or another such device that may be categorized as a UE despite not providing a direct service to a user. In some references, an ED 102 may also be referred to as a mobile device (MD), a term intended to reflect devices that connect to mobile network, regardless of whether the device itself is designed for, or capable of, mobility. Specific devices may utilize all of the components shown or only a subset of the components, and levels of integration may vary from device to device. Furthermore, a device may contain multiple instances of a component, such as multiple processors, memories, transmitters, receivers, etc. The electronic device 102 typically includes a processor 106, such as a Central Processing Unit (CPU), and may further include specialized processors such as a Graphics Processing Unit (GPU) or other such processor, a memory 108, a network interface 110 and a bus 112 to connect the components of ED 102. ED 102 may optionally also include components such as a mass storage device 114, a video adapter 116, and an I/O interface 118 (shown in dashed lines).

The memory 108 may comprise any type of non-transitory system memory, readable by the processor 106, such as static random-access memory (SRAM), dynamic random access memory (DRAM), synchronous DRAM (SDRAM), read-only memory (ROM), or a combination thereof. In specific embodiments, the memory 108 may include more than one type of memory, such as ROM for use at boot-up, and DRAM for program and data storage for use while executing programs. The bus 112 may be one or more of any type of several bus architectures including a memory bus or memory controller, a peripheral bus, or a video bus.

The electronic device 102 may also include one or more network interfaces 110, which may include at least one of a wired network interface and a wireless network interface. As illustrated in FIG. 1, network interface 110 may include a wired network interface to connect to a network 120, and also may include a radio access network interface 122 for connecting to other devices over a radio link. When ED 102 is network infrastructure, the radio access network interface 122 may be omitted for nodes or functions acting as elements of the Core Network (CN) other than those at the radio edge (e.g. an eNB). When ED 102 is infrastructure at the radio edge of a network, both wired and wireless network interfaces may be included. When ED 102 is a wirelessly connected device, such as a User Equipment, radio access network interface 122 may be present and it may be supplemented by other wireless interfaces such as WiFi network interfaces. The network interfaces 110 allow the electronic device 102 to communicate with remote entities such as those connected to network 120.

The mass storage 114 may comprise any type of non-transitory storage device configured to store data, programs, and other information and to make the data, programs, and other information accessible via the bus 112. The mass storage 114 may comprise, for example, one or more of a solid-state drive, hard disk drive, a magnetic disk drive, or an optical disk drive. In some embodiments, mass storage 114 may be remote to the electronic device 102 and accessible through use of a network interface such as interface 110. In the illustrated embodiment, mass storage 114 is distinct from memory 108 where it is included, and may generally perform storage tasks compatible with higher latency, but may generally provide lesser or no volatility. In some embodiments, mass storage 114 may be integrated with a memory 108 to form an heterogeneous memory.

The optional video adapter 116 and the I/O interface 118 (shown in dashed lines) provide interfaces to couple the electronic device 102 to external input and output devices. Examples of input and output devices include a display 124 coupled to the video adapter 116 and an I/O device 126 such as a touch-screen coupled to the I/O interface 118. Other devices may be coupled to the electronic device 102, and additional or fewer interfaces may be utilized. For example, a serial interface such as Universal Serial Bus (USB) (not shown) may be used to provide an interface for an external device. Those skilled in the art will appreciate that in embodiments in which ED 102 is part of a data center, I/O interface 118 and Video Adapter 116 may be virtualized and provided through network interface 110.

In some embodiments, electronic device 102 may be a standalone device, while in other embodiments electronic device 102 may be resident within a data center. A data center, as will be understood in the art, is a collection of computing resources (typically in the form of servers) that can be used as a collective computing and storage resource. Within a data center, a plurality of servers can be connected together to provide a computing resource pool upon which virtualized entities can be instantiated. Data centers can be interconnected with each other to form networks consisting of pools computing and storage resources connected to each by connectivity resources. The connectivity resources may take the form of physical connections such as Ethernet or optical communications links, and may include wireless communication channels as well. If two different data centers are connected by a plurality of different communication channels, the links can be combined together using any of a number of techniques including the formation of link aggregation groups (LAGs). It should be understood that any or all of the computing, storage and connectivity resources (along with other resources within the network) can be divided between different sub-networks, in some cases in the form of a resource slice. If the resources across a number of connected data centers or other collection of nodes are sliced, different network slices can be created.

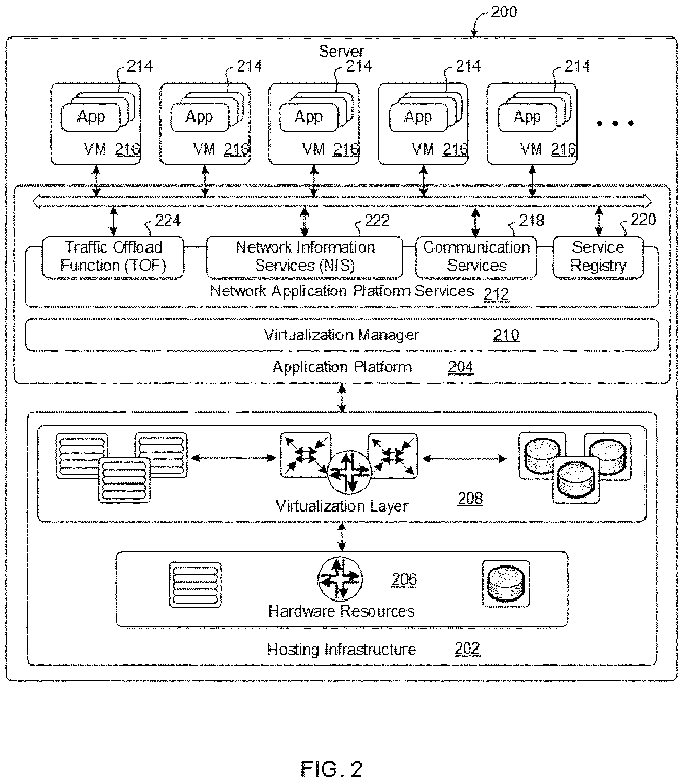

FIG. 2 is a block diagram schematically illustrating an architecture of a representative server 200 usable in embodiments of the present disclosure. It is contemplated that the server 200 may be physically implemented as one or more computers, storage devices and routers (any or all of which may be constructed in accordance with the system 100 described above with reference to FIG. 1) interconnected together to form a local network or cluster, and executing suitable software to perform its intended functions. Those of ordinary skill will recognize that there are many suitable combinations of hardware and software that may be used for the purposes of the present disclosure, which are either known in the art or may be developed in the future. For this reason, a figure showing the physical server hardware is not included in this specification. Rather, the block diagram of FIG. 2 shows a representative functional architecture of a server 200, it being understood that this functional architecture may be implemented using any suitable combination of hardware and software. It will also be understood that server 200 may itself be a virtualized entity. Because a virtualized entity has the same properties as a physical entity from the perspective of another node, both virtualized and physical computing platforms may serve as the underlying resource upon which virtualized functions are instantiated.

As may be seen in FIG. 2, the illustrated server 200 generally comprises a hosting infrastructure 202 and an application platform 204. The hosting infrastructure 202 comprises the physical hardware resources 206 (such as, for example, information processing, traffic forwarding and data storage resources) of the server 200, and a virtualization layer 208 that presents an abstraction of the hardware resources 206 to the Application Platform 204. The specific details of this abstraction will depend on the requirements of the applications being hosted by the Application layer (described below). Thus, for example, an application that provides traffic forwarding functions may be presented with an abstraction of the hardware resources 206 that simplifies the implementation of traffic forwarding policies in one or more routers. Similarly, an application that provides data storage functions may be presented with an abstraction of the hardware resources 206 that facilitates the storage and retrieval of data (for example using Lightweight Directory Access Protocol - LDAP). The virtualization layer 208 and the application platform 204 may be collectively referred to as a Hypervisor.

The application platform 204 provides the capabilities for hosting applications and includes a virtualization manager 210 and network application platform services 212. The virtualization manager 210 supports a flexible and efficient multi-tenancy run-time and hosting environment for applications 214 by providing Infrastructure as a Service (laaS) facilities. In operation, the virtualization manager 210 may provide a security and resource "sandbox" for each application being hosted by the platform 204. Each "sandbox" may be implemented as a Virtual Machine (VM) 216 that may include an appropriate operating system and controlled access to (virtualized) hardware resources 206 of the server 200. The network application platform services 212 provide a set of middleware application services and infrastructure services to the applications 214 hosted on the application platform 204, as will be described in greater detail below.

Applications 214 from vendors, service providers, and third-parties may be deployed and executed within a respective Virtual Machine 216. For example, MANagement and Orchestration (MANO) functions and Service Oriented Network Auto-Creation (SONAC) functions (or any of Software Defined Networking (SDN), Software Defined Topology (SDT), Software Defined Protocol (SDP) and Software Defined Resource Allocation (SDRA) controllers that may in some embodiments be incorporated into a SONAC controller) may be implemented by means of one or more applications 214 hosted on the application platform 204 as described above. Communication between applications 214 and services in the server 200 may conveniently be designed according to the principles of Service-Oriented Architecture (SOA) known in the art.

Communication services 218 may allow applications 214 hosted on a single server 200 to communicate with the application-platform services 212 (through predefined Application Programming Interfaces (APIs) for example) and with each other (for example through a service-specific API).

A service registry 220 may provide visibility of the services available on the server 200. In addition, the service registry 220 may present service availability (e.g. status of the service) together with the related interfaces and versions. This may be used by applications 214 to discover and locate the end-points for the services they require, and to publish their own service end-point for other applications to use.

Mobile-edge Computing allows cloud application services to be hosted alongside virtualized mobile network elements in data centers that are used for supporting the processing requirements of the Cloud-Radio Access Network (C-RAN). For example, eNodeB or gNB nodes may be virtualized as applications 214 executing in a VM 216. Network Information Services (NIS) 222 may provide applications 214 with low-level network information. For example, the information provided by NIS 222 may be used by an application 214 to calculate and present high-level and meaningful data such as: cell-ID, location of the subscriber, cell load and throughput guidance.

A Traffic Off-Load Function (TOF) service 224 may prioritize traffic, and route selected, policy-based, user-data streams to and from applications 214. The TOF service 224 may be supplied to applications 214 in various ways, including: A Pass-through mode where (either or both of uplink and downlink) traffic is passed to an application 214 which can monitor, modify or shape it and then send it back to the original Packet Data Network (PDN) connection (e.g. 3GPP bearer); and an End-point mode where the traffic is terminated by the application 214 which acts as a server.

As may be appreciated, the server architecture of FIG. 2 is an example of Platform Virtualization, in which each Virtual Machine 216 emulates a physical computer with its own operating system, and (virtualized) hardware resources of its host system. Software applications 214 executed on a virtual machine 216 are separated from the underlying hardware resources 206 (for example by the virtualization layer 208 and Application Platform 204). In general terms, a Virtual Machine 216 is instantiated as a client of a hypervisor (such as the virtualization layer 208 and application-platform 204) which presents an abstraction of the hardware resources 206 to the Virtual Machine 216.

Other virtualization technologies are known or may be developed in the future that may use a different functional architecture of the server 200. For example, Operating-System-Level virtualization is a virtualization technology in which the kernel of an operating system allows the existence of multiple isolated user-space instances, instead of just one. Such instances, which are sometimes called containers, virtualization engines (VEs) or jails (such as a "FreeBSD jail" or "chroot jail"), may emulate physical computers from the point of view of applications running in them. However, unlike virtual machines, each user space instance may directly access the hardware resources 206 of the host system, using the host systems kernel. In this arrangement, at least the virtualization layer 208 of FIG. 2 would not be needed by a user space instance. More broadly, it will be recognised that the functional architecture of a server 200 may vary depending on the choice of virtualisation technology and possibly different vendors of a specific virtualisation technology.

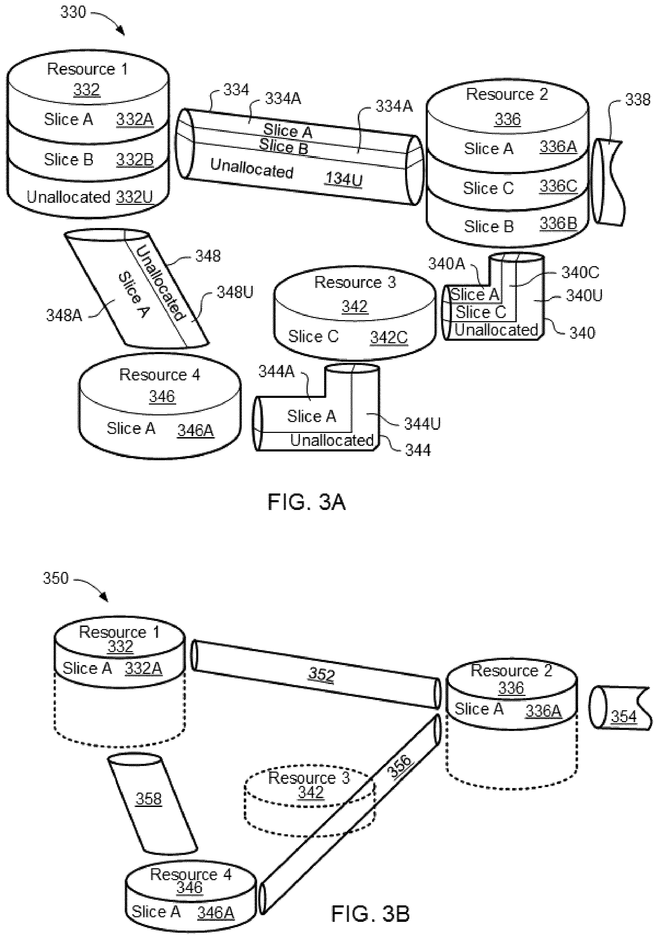

FIG. 3A illustrates an architecture 330 that connects a plurality of connectivity, compute and storage resources, and supports network slicing. In the following, resources are connected to other discrete resources through Connectivity Resources 334, 338, 340, 344 and 348. It will be understood that as network functions are instantiated within resources, they may be connected to each other by virtual connections that in some embodiments do not rely upon the physical connectivity resources illustrated, but instead may be connected to each other by virtual connections, which will also be considered as connectivity resources. Resource 1 332 is connected to Resource 2 336 by Connectivity Resource 334. Resource 2 336 is connected to unillustrated resources through Connectivity Resource 338, and is also connected to Resource 3 342 by Connectivity Resource 340. Resource 4 346 is connected to Resource 3 342 through Connectivity Resource 344, and to Resource 1 332 by Connectivity Resource 348. Resource 1 332, Resource 2 336, Resource 3 342 and Resource 4 346 should be understood as representing both compute and storage resources, although specialized functions may also be included. In some embodiments a specialized network function may be represented by any or all of Resource 1 332, Resource 2 336, Resource 3 342 and Resource 4 346, in which case, it may be the capability or capacity of the network function that is being sliced. Connectivity Resources 334, 338, 340, 344 and 1348 may be considered, for the following discussions, as logical links between two points (e.g. between two data centers) and may be based on set of physical connections.

Resource 1 332 is partitioned to allocate resources to Slice A 332A, and Slice B 332B. A portion 332U of the resources available to Resource 1 332 remains unallocated. Those skilled in the art will appreciate that upon allocation of the network resources to different slices, the allocated resources are isolated from each other. This isolation, both in the compute and storage resources, ensures that processes in one slice do not interact or interfere with the processes and functions of the other slices. This isolation can be extended to the connectivity resources as well. Connectivity Resource 334 is partitioned to provide connectivity to Slice A 334A and Slice B 334B, and also retains some unallocated bandwidth 334U. It should be understood that in any resource that either has unallocated resources or that has been partitioned to support a plurality of resources, the amount of the resource (e.g. the allocated bandwidth, memory, or number of processor cycles) can be varied or adjusted to allow changes to the capacity of each slice. In some embodiments, slices are able to support "breathing", which allows the resources allocated to the slice to increase and decrease along with any of the available resources, the required resources, an anticipated resource need, or other such factors, alone or in combination with each other. In some embodiments the allocation of resources may be in the form of soft slices in which a fixed allocation is not committed and instead the amount of the resource provided may be flexible. In some embodiments, a soft allocation may allocate a percentage the resource to be provided over a given time window, for example 50% of the bandwidth of a connection over a time window. This may be accompanied by a minimum guaranteed allocation. Receiving a guarantee of 50% of the capacity of a connectivity resource at all times may provide very different service characteristics than receiving 50% of the capacity of the connectivity resource over a ten second window.

Resource 2 336 is partitioned to support allocations of the available compute and storage resources to Slice A 336A, Slice C 336C and Slice B 336B. Because there is no allocation of resources in connectivity resource 334 to Slice C, Resource 2 336 may, in some embodiments, not provide a network interface to Slice C 336C to interact with connectivity resource 334. Resource 2 336 can provide an interface to different slices to Connectivity Resource 338 in accordance with the slices supported by Connectivity Resource 338. Connectivity Resource 340 is allocated to Slice A 340A and Slice C 340C with some unallocated capacity 340U. Connectivity Resource 340 connects Resource 2 336 with Resource 3 342.

Resource 3 342 provides compute and storage resources that are allocated exclusively to Slice C 342C, and is also connected to Connectivity Resource 344 which in addition to the unallocated portion 344U includes an allocation of Connectivity Resource 344A to slice A. It should be noted that from the perspective of functions or processes within Slice A, Resource 3 342 may not be visible. Connectivity Resource 344 provides a connection between Resource 3 342 and Resource 4 346, whose resources are allocated entirely to Slice A 346A. Resource 4 346 is connected to Resource 1 332 by Connectivity Resource 348, which has a portion of the connection allocated to Slice A 348A, while the balance of the resources 348U are unallocated.

FIG. 3B illustrates the view of the architecture 336 of FIG. 3A as would be seen from the perspective of Slice A. This may be understood as a view of the resources allocated to Slice A 350 across the illustrated network segment. From within Slice A 350, only the portions of the resources that have been allocated to Slice A 350 are visible. Thus, instead of being able to see the full capacity and capability of Resource 1 332, the capabilities and capacity of the portion allocated to Slice A 332A is available. Similarly, instead of being able to see the capacity and capabilities of Resource 2 336, only the capabilities and capacity of the portion allocated to Slice A 336A are available. Because nothing from Resource 3 342 had been allocated to Slice A 350, Resource 3 342 is not present within the topology of Slice A 350. All of the capacity and capability of Resource 4 346 was allocated to Slice A 346, and as such is present within Slice A 350. Slice A 332A of Resource 1 332 is connected to Slice A 336A of Resource 2 336 by logical link 352. Logical Link 352 may correspond to the portion of connectivity resource 334 allocated to Slice A 334A. Slice A 336A is connected to logical link 354 (representative of the portion of connectivity resource 338 allocated to Slice A 350), and is connected to Slice A 346A by logical link 356. Logical link 356 is representative of the portions of connectivity resource 340 and connectivity resource 344 that have been allocated to Slice A (portions 340A and 344A respectively). It should be understood that due to the absence of Resource 3 342 from Slice A 150, any traffic transmitted by Slice A 336A onto Connectivity Resource 340A will be delivered to Resource 4 346, and similarly any traffic transmitted from Slice 346A into Connectivity Resource 344A will be delivered to Slice A 336A. As such, within Slice A 350, Connectivity Resources 340A and 344A can be modelled as a single logical link 356. Logical link 358 is representative of the portion of Connectivity Resource 348 allocated to slice A 348A.

It should be understood that within the storage and compute resources illustrated in FIGs. 3A and 3B, network functions can be instantiated using any of a number of known techniques, including network function virtualization (NFV), to create Virtual Network Functions (VNFs). While conventional telecommunications networks, including so-called Third Generation and Fourth Generation (3G/4G) networks, can be implemented using virtualized functions in their core networks, next generation networks, including so-called Fifth Generation (5G) networks, are expected to use NFV and other related technologies as fundamental building blocks in the design of a new Core Network (CN) and Radio Access Network (RAN). By using NFV, and technologies such as Software Defined Networking (SDN), functions in a CN can be instantiated at a location in the network that is determined based on the needs of the network. It should be understood that if a network slice is created, the allocation of resources at different data centers allows for the instantiation of a function at or near a particular geographic location, even within the slice where resources have been abstracted. This allows virtualized functions to be "close" in a physical sense to the location at which they are used. This may be useful, and may be combined with a sense of topological closeness to select a logical location at which to instantiate a function so that it is geographically or topologically close to a selected physical or network location.

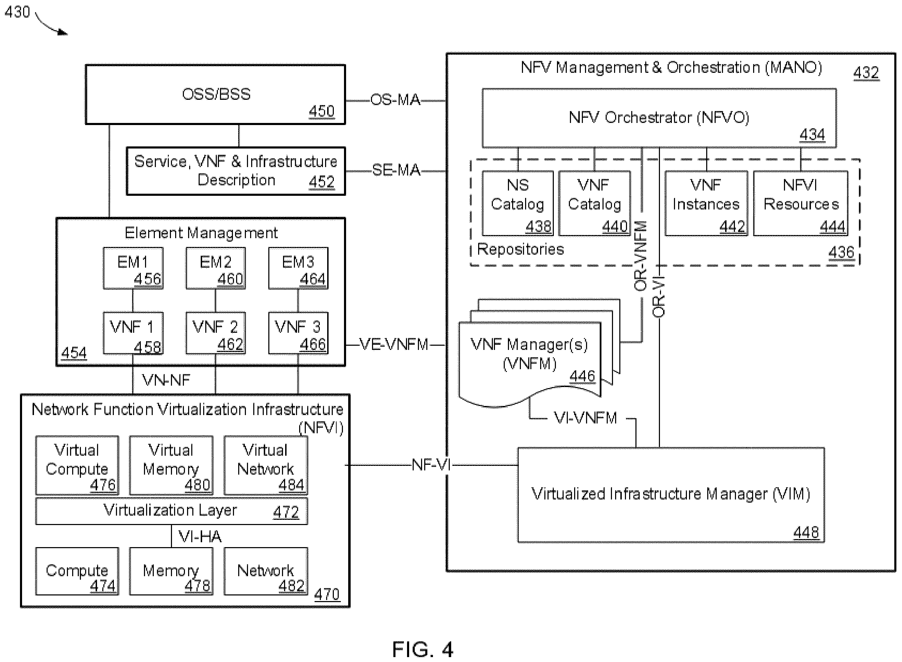

The European Telecommunications Standards Institute (ETSI) has developed a set of standards for Network Function Virtualization (NFV) MANagement and Orchestration (MANO). As illustrated in FIG. 4, the NFV-MANO system allows for the management of NFV instantiation and modification. As illustrated, there can be interfaces to existing systems such as the OSS/BSS 450. In network architecture 430, an NFV-MANO system 432 includes an orchestrator 434 which can access libraries 436 such as Network Service catalog 438, VNF Catalog 440, VNF Instances repository 442 and NFVI resources repository 444. The NS Catalog 438 may include templates which can be used as the basis for supporting network services. VNF catalog 440 may contain templates for the instantiation of different classes of VNFs. A particular VNF, after being instantiated, may be referred to as a VNF instance, and its attributes may be stored in VNF instances repository 442. NFVI resources 444 may be used to track the availability of resources, including both virtual resources and the physical infrastructure upon which they are instantiated. The NFVO 434 can be connected to a number of VNF Managers 446 through an OR-VNFM interface, and to a Virtualized Infrastructure Manager (VIM) 448 through a OR-VI interface. The VNFM 446 and VIM 448 can be connected to each other through a Vi-VNFM interface.

The NFV MANO 432 can communicate with an OSS/BSS system 450 through OS-MA interface, and to a Service, VNF & Infrastructure description database 452 though an SE-MA interface. The Service, VNF & Infrastructure description database 452 can contain operator information about the services, VNFs and infrastructure deployed in the network. Service, VNF & Infrastructure description database 452 and OSS/BSS 450 can be connected to each other so that the OSS/BSS 450 can update and maintain the Service, VNF & Infrastructure description database 452 as needed.

NFVI 470 interacts with the VIM 448 through the NF-VI interface. Underlying resources can often be classified as compute resources 474, memory resources 478 and network resources 482. Memory resources 478 may also be referred to as storage resources, while network resources 482 may also be referred to as connectivity resources. A virtualization layer 472 allows for the abstraction of the underlying resources which it is connected to through a Vi-HA interface. It should be understood that the underlying resources may be either physical or virtual resources. The Virtualization layer 472 allows for the abstraction of the underlying resources into virtual compute resources 476, virtual memory resources 480 and virtual network resources 484. These virtualized resources can be provided to the element management system 454 through the VN-NF interface so that they can be used as the resources upon which the VNFs (shown as VNF1 458, VNF2 462 and VNF 3 466) can be instantiated. EM 454 can be connected to the VNFM 446 within NFV MANO 432 through interface VE-VNFM, and to the OSS/BSS 450 through another interface. Each VNF instantiated upon the virtual resources provided by NFVI 470 can be associated with an element manager (EM1 456, EM2 460 and EM3 464). The use of an element manager allows the OSS/BSS to have two paths through which the VNFs can be managed. A VNF can be managed through the VNFM 446, or through the element manager associated with the VNF. Each element manager can provide the same management controls that it would otherwise provide for a physical network element. Thus, the OSS/BSS 450 can treat each VNF as a conventional network function. Modification to the resource allocation associated with a VNF can be requested by an element manager through the VNFM 446, or through a request from the OSS/BSS 450 over the OS-MA interface.

The virtualization of network functions allows functions to be deployed with the resources that are required. As the demand for the functions increases, the resources allocated to the functions can be increased, which avoids an intentional over provisioning of the functions at instantiation. In conjunction with the above described slicing and data center utilization, flexible networks can be deployed in a manner that allows an operator to dynamically modify the connectivity between functions (thus changing the logical topology of the network) and to dynamically modify the location of and resources allocated to the network functions (thus changing the physical topology of the underlying network). Additional resources at the same location can be allocated to existing function to allow for scaling up of an existing function, and resources can be removed from an allocation to allow for a scaling down of a function. Resources from more than one resource pool or data center can be allocated to a function so that it can be scaled out, and resources from different pools can be removed to allow a function to be scaled in. Functions can be moved by transferring their state information to another network function, and in some instances, a function can be moved through a combination of scaling out and scaling in functions.

3GPP TR 28.801 describes three functional entities for managing one or more NSIs to support communication services. These communication services and the functional entities may be, in some embodiments, designed to support fifth generation mobile communications networks (also referred to as 5G). These functional entities include:
- Communication Service Management Function (CSMF): Responsible for translating the communication service related requirement to network slice related requirements. The CSMF communicates with Network Slice Management Function (NSMF).
- Network Slice Management Function (NSMF): Responsible for management and orchestration of NSI. Derive network slice subnet related requirements from network slice related requirements. The NSMF communicates with the Network Slice Subnet Management Function (NSSMF) and Communication Service Management Function.
- Network Slice Subnet Management Function (NSSMF): Responsible for management and orchestration of NSSI. The NSSMF communicates with the NSMF.

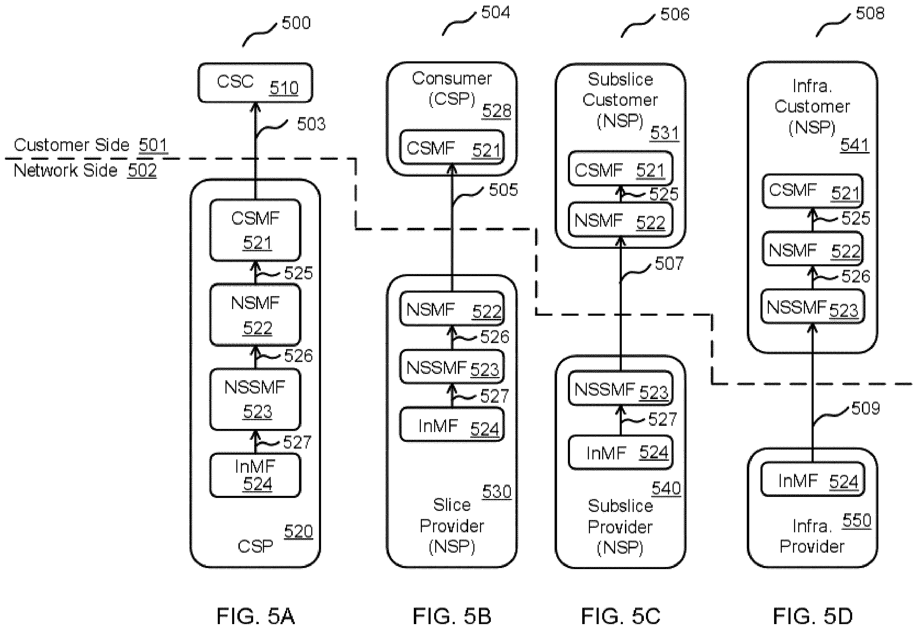

Turning now to FIG. 5A, there is shown a block diagram shown generally at 500 illustrating an embodiment of network-side and customer-side MFs to offer a CaaS to a customer. FIG. 5A shows a notional boundary between a customer-side 501 and network-side 502 of a communication system. A customer is shown on the customer-side 501 of the notional boundary and includes a communication service customer (CSC) 510 and a network management system (NMS) is shown of a network side of the notional boundary and includes a customer service provider (CSP) 520.

The CSP 520 comprises at least one network-side MF including without limitation, a CSMF 521, an NSMF 522, an NSSMF 523 and an Infrastructure Management Function (InMF) 524.

The CSMF 521 is configured to instantiate an interface 503 and expose the interface 503 to the CSC 510 to enable the CSC 510 to use a CaaS offering provided by the CSP 520. Thus it may be said that the interface 503 between the CSMF 521 and the CSC 510 constitutes an exposed interface.

The NSMF 522 is configured to instantiate an interface 525 and expose the interface 525 to the CSMF 521 to enable the CSMF 521 to use a NSaaS offering provided by the NSMF 522. Further, the NSSMF 523 is configured to instantiate an interface 526 and expose the interface 526 to the NSMF 522 to enable the NSMF 522 to use an NSSaaS offering provided by the NSSMF 523. Still further, the InMF 524 is configured to instantiate an interface 527 and expose the interface 527 to the NSSMF 523 to enable the NSSMF 523 to use an laaS offering provided by the InMF 524.

Turning now to FIG. 5B, there is shown a block diagram shown generally at 504 illustrating an embodiment of network-side 502 and customer-side 501 MFs to offer an NSaaS to a customer. The figure shows a network service provider (NSP) serving as a slice provider 530 of the network-side 502 and a CSP 528 acting as a network slice customer, which may be the CSP 520, on the customer-side 501.

The slice provider 530 comprises at least one network-side MF including without limitation, an NSMF 522, an NSSMF 523 and an InMF 524.

The customer-side CSP 528 comprises at least one customer-side MF including without limitation, a CSMF 521 that provides it with access to communication services.

The network-side NSMF 522 is configured to instantiate an interface 505 and expose the interface 505 to enable the customer-side CSMF 521 to use network slice-related capabilities provided by the network-side NSMF 522 in the form of an NSaaS offering. Thus it may be said that the interface 505 between the network-side NSMF 522 and the customer-side CSMF 521 of the customer-side CSP 528 constitutes an exposed interface.

The network-side NSSMF 523 is configured to instantiate an interface 526 and expose the interface 526 to enable the network-side NSMF 522 to use a NSSaaS offering provided by the NSSMF 523. Further, the InMF 524 is configured to instantiate an interface 527 and expose the interface to enable the NSSMF 523 to use an laaS offering provided by the InMF 524.

Turning now to FIG. 5C, there is shown a block diagram shown generally at 506 illustrating an embodiment of network-side 502 and customer-side 501 MFs to offer an NSSaaS to a customer. The figure shows an NSP serving as a subslice provider 540 on the network-side 502 and an NSP serving as a subslice customer 531, which may be the slice provider 530, on the customer side 501.

The subslice provider 540 comprises at least one network-side MF including without limitation, an NSSMF 523 and an InMF 524.

The customer side subslice customer 550 comprises at least one customer-side MF including without limitation, a CSMF 521 and an NSMF 522. The customer-side NSMF 522 is configured to instantiate interface 525 and expose interface 525 to enable the customer-side CSMF 521 to use an NSaaS provided by the customer side NSMF 522.

The network-side NSSMF 523 is configured to instantiate an interface 507 and expose the interface 507 to enable the customer-side NSMF 522 to use network slice subnet-related capabilities provided by the NSSMF 523 in the form of the NSSaaS offering. Thus it may be said that the interface 507 between the network-side NSSMF 523 and the customer-side NSMF 522 and of the customer-side subslice customer (NSP) 530 constitutes an exposed interface.

The network-side InMF 524 is configured to instantiate interface 527 and expose interface 527 to enable the network-side NSSMF 523 to use an laaS offering provided by the network-side InMF 524.

Turning now to FIG. 5D, there is shown a block diagram shown generally at 508 illustrating an embodiment of network-side and customer-side MFs to offer an laaS to a customer. The figure shows an infrastructure provider 550 on the network-side 502 and an NSP serving as an infrastructure customer 541, which may be the subslice provider 540, on the customer-side 501.

I The infrastructure provider 550 comprises at least one network-side MF including without limitation, an InMF 524.

The customer side infrastructure customer 541 comprises at least one customer-side MF including without limitation, a CSMF 521 that provides with access to communication services, an NSMF 522 that is configured to instantiate interface 525 and expose interface 525 to enable the CSMF 521 to user an NSaaS offering provided by the NSMF 522 and an NSSMF 523 that is configured to instantiate interface 526 and expose interface 526 to enable NSMF 522 to use an NSSaaS offering provided by NSSMF 523.

The network side InMF 524 is configured to instantiate an interface 509 and expose the interface 506 to enable the customer-side NSSMF 523 to use infrastructure-related capabilities provided by the network-side InFM 524 in the form of the laaS offering. Thus it may be said that the interface 507 between the network-side InMF 524 and the customer-side NSSMF 523 and of the customer-side infrastructure customer (NSP) 540 constitutes an exposed interface.

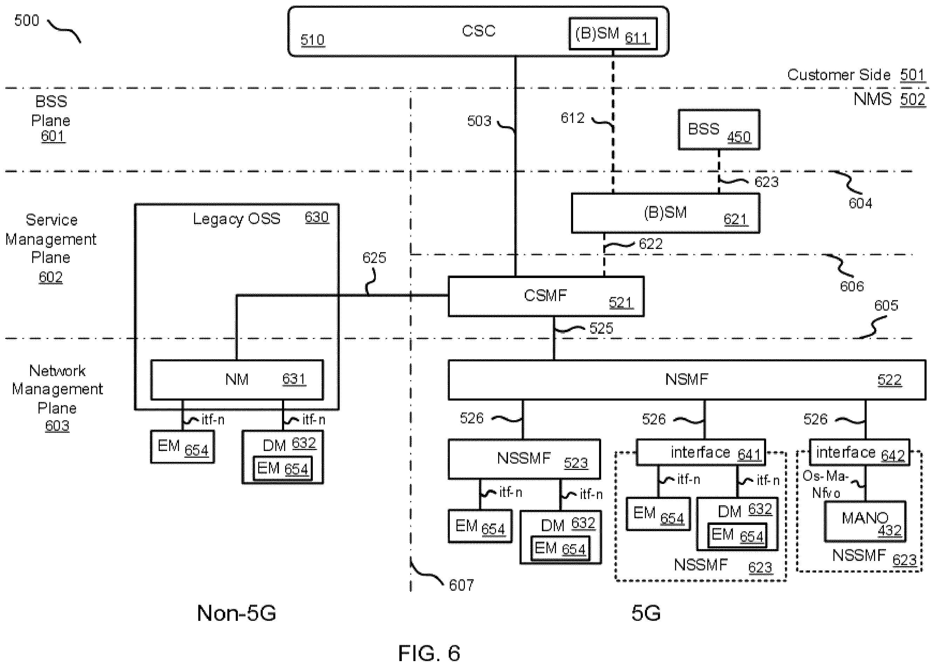

Aspects of the present disclosure provide techniques enabling 5G management entities to interact with legacy (non-5G) management entities to provide 5G management functionality. Specific embodiments, which may be understood by reference to FIG. 6, which shows the block diagram 500 of FIG. 5A in greater detail, may include any one or more of:
(1) CSMF 521 - service management (SM), may use interface 612 for providing a vertical service instance slice (e.g. meter reading slice) to a (B)SM 611 of the CSC 510 such as without limitation, a vertical service operator (e.g., water department). Although the B(S)M 621 is shown in FIG. 6 as being separate from the CSMF 521, in some embodiments, the B(SM) may be co-located with the CSMF 521.
   - the (B)SM 621 of the CSP 520 (e.g. service instance provider) may provide at least one catalogue (not shown) to the (B)SM 611 of the CSC 510.
   - the (B)SM 611 of the CSC 510 may make a special request using the catalogue attributes and negotiate for a service level agreement (SLA) (not shown) with the CSP 520.
   - the (B)SM 621 of the CSP 520 can establish the vertical service slice and provide the mechanism (e.g. instructions and information) to use the slice. This mechanism includes:
   - the CSP 520 can send information including without limitation, at least one of the slice ID, a service ID (which may be specific to the slice), and an indication of the authentication mechanism to be used. This information may be used to identify the traffic (or traffic types) that are expected to be handled, additionally the information may include attributes that can be used in creating a PDU session by its end users.
   - data (performance, fault, loading, traffic volume) used by each PDU session created by the end user of the CSC 510 is provided to the CSC 510.
(2) NSMF 522 of the slice provider NSP 530 - CSMF 521 of the CSP 520
   - available NSI types and attributes database can be provided to the CSMF 521 by the NSMF 522.
   - the CSMF 521 can send the network slice requirements to the NSMF 522 and negotiate for slice capabilities.
   - fill an attribute table - (list provided in the technical report) may include without limitation, the network slice type.
   - the NSMF 522 can send the slice type requested together with, without limitation, at least one of the slice ID, the authentication method, how to access the MFs, how to configure the NFs, how to obtain performance management (PM), how to obtain fault management (FM) data, and how to do other lifecycle MFs on the 3rd party network slice provided to the CSMF 521.
(3) NSSMF 523 of the subslice provider 540 - NSMF 522 of the subslice customer 530, which may in some embodiments be similar to (2) above, except that part of the network is managed by the 3rd party NSMF 522.
(4) NSMF 522 communication with a domain manager DM 632 (FIG. 6) and /or a MANO 432, via interface adaptation. In some embodiments, this may include at least one of mapping relationships between an NSSMF-exposed interface 526 and itf-n exposed interface and mapping relationships between an NSSMF-exposed interface 526 and Os-Ma-Nfvo interface.
(5) different architectures may make use of at least one of traditional, legacy and non-5G network management system components including without limitation, at least one of a network manager (NM) 631, a DM 632, and an EM 654 as well as the MANO 432. Those schemes may be used for different services based on the slice concept
   - the CSMF 521 may directly use the NM 631 as a management resource to manage the legacy network elements.
   - the NSSMF 523 can directly use at least one of the DM 643 and the EM 654 (directly or through the DM 632) to manage the 5G network elements.
   - the NSMF 522 can use at least one of the DM 632, and the EM 654 (directly or through the DM 632), and the MANO 432 as a notional NSSMF 623 using an appropriate interface adaptor 641, 642.
(6) An architecture for using infrastructure as a service for slicing part.

FIG. 6 is a more detailed version of the block diagram 500 of FIG. 5A, illustrating relationships between network-side MFs and a customer to support a CaaS offering.

In the embodiment of FIG. 6, the CSC 510 is shown on the customer side 501 and may comprise a customer-side (B)SM 611, which may also be referred to as a customer's SM (SM(C)). The customer-side (B)SM 611 may be responsible for service-related management for one or more types of service. Specific responsibilities of the customer-side (B)SM 611 may include, without limitation, service negotiation with a customer providing details of services that can be offered; finalizing the SLA and providing business service requirements to the appropriate network-side MFs, typically by negotiations with a network-side (B)SM 621, which may also be referred to as a provider's SM (SM(P)), with which it is coupled and communicates 612, until an SLA is agreed to.

By contrast, the NMS on the network-side 502 is subdivided into a plurality of planes, including without limitation, a BSS plane 601, a service management plane 602 and a network management plane 603. The BSS plane 601 and the service management plane 602 lie on opposite sides of a notional boundary 604 therebetween and the service management plane 602 and the network management plane 603 lie on opposite sides of a notional boundary 605 therebetween.

The BSS 450 lies in the BSS plane 601 and is coupled to and communicates 623 with the network-side (B)SM 621 (in the service management plane 602) by which the BSS 450 may provide directions to the network-side (B)SM 621 in the context of the negotiations between the network-side (B)SM 621 and the customer-side (B)SM 611 to arrive at the SLA.

The network-side (B)SM 621 and the CSMF 521 lie in the service management plane 602. In some embodiments, the service management plane 602 may be subdivided by a notional boundary 606 separating the network-side (B)SM 621 and the CSMF 521. It will be appreciated that, in some embodiments, some of the functions attributed to the network-side CSMF 521 in the present disclosure may be moved across such notional boundary 606 to the network-side (B)SM 621 and *vice versa.*

The network-side (B)SM 621 is coupled to and communicates with the customer-side (B)SM 611 via an interface 612 to arrive at the SLA. Thus it may be said that the interface 612 between the network-side (B)SM 621 and the customer-side (B)SM 611 constitutes an exposed interface.

By way of non-limiting example, the interactions between the customer-side (B)SM 611 and the network side (B)SM 621 along the exposed interface 612 include the interfaces discussed below in detail under the heading "SM(C)-SM(P) EXPOSED INTERFACES" and may include, without limitation, at least one of: a template management interface, a service requirement management interface and a service management interface as discussed therein.

Additionally, the network-side (B)SM 621 is coupled to and communicates 622 with the CSMF 521 to provide orders to the CSMF 521 in accordance with the terms of the SLA, once negotiated, for the CaaS offering 503. Thus it may be said that the interface 622 between the network-side (B)SM 621 and the CSMF 521 constitutes an exposed interface.

By way of non-limiting example, the interactions between the network-side (B)SM 621 and the CSMF 521 along the exposed interface 622 include the interfaces discussed below in detail under the heading "SM-CSMF EXPOSED INTERFACES" and may include, without limitation, at least one of a template management interface, a service requirement management interface, a network resource management interface, a service management interface and a communication service instance (CSI) lifecycle management (LM) interface as discussed therein.

The network-side (B)SM 621 is coupled to and communicates 623 with the BSS 450 to receive directions therefrom in the context of the negotiations between it and the customer-side (B)SM 611 to arrive at the SLA.

The CSMF 521 is coupled to and provides the CaaS offering 503 to the CSC 510 in accordance with the terms of the SLA once negotiated, and is coupled to and communicates 525 with the NSMF 522 (in the 5G part of the network management plane 603) to obtain access to network slice-related capabilities therefrom. In addition, the CSMF 521 is coupled to and communicates 625 with a legacy (non-5G) NM 631 (in the non-5G part of the network management plane 603), that may be considered to be part of a legacy OSS 630, to obtain access to non-5G network capabilities therefrom in a manner similar to the network slice-related capabilities it receives from the NSMF 522, but in a non-5G context, to at least one of manage legacy EMs 654 and manage legacy DMs 632 (and thus indirectly at least one of manage and interact with other legacy EMs 654).

All remaining network-side MFs reside in the network management plane 603. These include without limitation, the NSMF 522, the NSSMF 523, the NM 631, interface adaptors 641, 642, and at least of the associated EMs 654, DMs 643 and the MANO 432. As discussed above, in some embodiments, the NMS 502 may also be subdivided into 5G network components and legacy or non-5G components. In FIG. 6 this notional subdivision is shown by notional boundary 607.

The NSMF 522 is coupled to and communicates 525 with the CSMF 521 to provide access to network slice-related capabilities and is coupled to and communicates 526 with the NSSMF 523 to obtain access to network slice subnet-related capabilities therefrom. Additionally in some embodiments, the NSMF 522 may be coupled to and communicate 526 with interface adaptor 641 in order to at least one of manage a legacy EM 454, interact with a legacy EM 454, manage a legacy DM 632, and interact with a legacy DM 632 (and thus indirectly manage other legacy EMs 654). Further, in some embodiments, the NSMF 522 may be coupled to and communicate 526 with interface adaptor 642 in order to at least one of manage and interact with a MANO 432.

The NSSMF 523 is coupled to and communicates 526 with the NSMF 522 to provide access to network slice subnet-related capabilities. Additionally in some embodiments, the NSSMF 522 may be coupled to and communicate with at least one of a legacy EM 654 to at least one of manage and interact with it and a legacy DM 632 to at least one of manage and interact with it (and thus indirectly at least one of manage and interact with other legacy EMs 654) along an itf-n interface.

The interface adaptor 641 is coupled to and communicates 526 with the NSMF 522 and with at least one of a legacy EM 654 and a legacy DM 632 along an itf-n interface to allow the NSMF 522 to manage and/or interact with them (and through the DM 632, to indirectly at least one manage and interact with other legacy EMs 654) by implementing the functionality of a notional NSSMF 623 through performing interface conversion functions. Thus it may be said that the interface adaptor 641 between the NSMF 522 and the legacy EM 654, or the legacy DM 632, or both the legacy EM 654 and the legacy DM 632 (and thus, indirectly other legacy EMs 654) constitutes an exposed interface.

By way of non-limiting example the interactions between the NSMF 522 and at least one of the legacy EM 654 and legacy DM 632 (and thus, indirectly other legacy EMs 654) along the exposed interface adaptor 641 include the interface discussed below in detail under the heading "Nsmf-nssmf to itf-n" and may include without limitation, at least one of an NSSI LM interface to Generic/Commin Interface IRPs, an NSSI LM interface to CM related Interface IRPs, an NSSI LM interface to Son related Interface IRPs, an NSSI PM interfae to PM file format/collection & Trace relate Interface IRPs and, an NSSI FM interface to FM related Interface IRPs as discussed therein.

The interface adaptor 642 is coupled to and communicates 526 with the NSMF 522 and with the MANO 432 along an Os-Ma-nfvo interface to allow the NSMF 522 to at least one manage and interact with the MANO 432 by implementing the functionality of a notional NSSMF 623 through performing interface conversion functions. Thus it may be said that the interface adaptor 642 between the NSMF 522 and the MANO 432 constitutes an exposed interface.

By way of non-limiting example the interactions between the NSMF 522 and the MANO 432 along the interface adaptor 642 include the interface discussed below in detail under the heading "Nsmf-nssmf to Os-Ma-Nfvo" and may include without limitation, at least one of an NSST, SERVICEREQUIRE management interface to NSD interface, an NSSI LM interface to NS LM interface, an NSSI PM interface to NS PM interface and an NSSI FM interface to NS FM interface as discussed therein.

The NM 631 is coupled to and communicates 625 with the CSMF 521 and with at least one of a legacy EM 654 and a legacy DM 632 along an itf-n interface to allow the CSMF 521 to at least one of manage and interact with them (and through the DM 632, to indirectly at least one of manage and interact with other legacy EMs 654.

It should be understood that in many implementations, the resources under the management of the NSMF 522 may have been obtained from different infrastructure or resource providers. Each of these resource providers may have a different management mechanism. The resources may have been provided to a service provider in the form of a network slice. When an NSMF 522 interacts with a resource, it may do so through an NSSMF 523, 623, through a DM 632 or through a MANO 432. Different resources may be accessible through one of the available interfaces. Some resources may be available through more than one of the interfaces, while others are available through only one of the interfaces. Thus, when sending an instruction or configuration information, the NSMF 522 may select one of a plurality of interfaces in accordance with the nature of the interaction and in accordance with the resource with which it is to communicate.

It should also be understood that where an interface is illustrated between the NSMF 522 and either the DM 632 or the MANO 432, in some embodiments the interface adaptors 641, 642 (which may be used as a translation between defined Application Program Interfaces (APIs)), may be integrated in one or both of the sides of the communication. For example, in some embodiments, an NSMF 522 may be configured so that it does not need an external interface to communicate with a particular DM 632, while it may need an interface to communicate with a MANO 432 (or even with a different DM 632). The modifications to allow an NSMF 522 and DM 632 (or an NSMF 522 and a MANO 432) to communicate with each other can be implemented in one or both of the entities. This allows for the NSMF 522 to be modified so that it can interact with any MANO 432, or it may allow for both the NSMF 522 and MANO 432 to be configured to communicate without an interface. Those skilled in the art will appreciate that this may be considered as the incorporation of the interface in one or both of the functional entities.

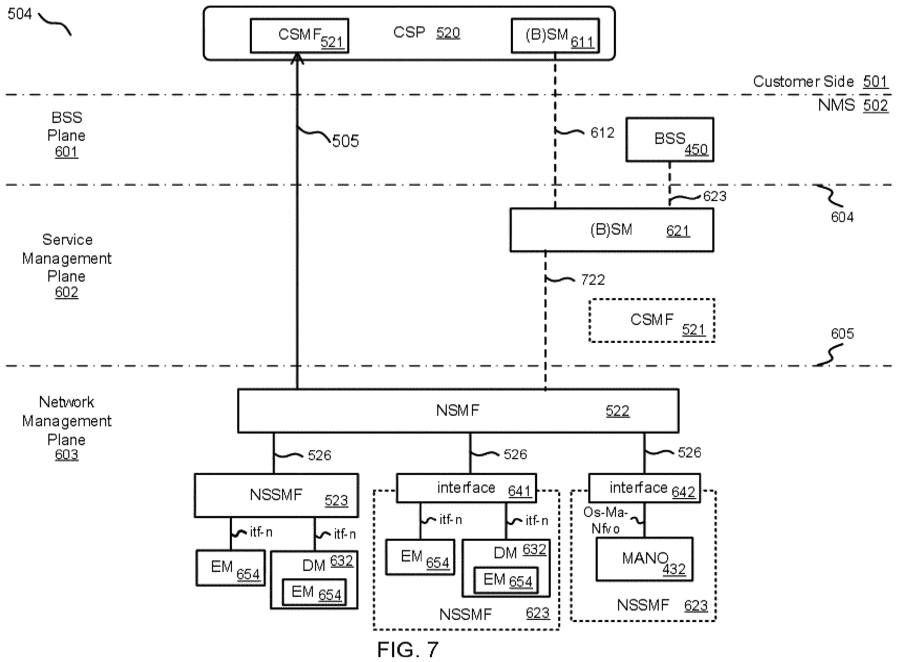

FIG. 7 is a more detailed version of the block diagram 504 of FIG. 5B illustrating relationships between customer-side and network-side MFs to support an NSaaS offering 505.

In FIG. 7, there may or may not be a network-side CSMF 521 (shown in dashed outline) in the service management plane 602 but if there is, it is not involved in the provision of the NSaaS offering 505.

Thus, as in FIG. 6, the network-side (B)SM 621 is coupled to and communicates 612 with the customer-side (B)SM 611 to arrive at the SLA and is coupled to and communicates 623 with the BSS 450 to receive directions therefrom in the context of the negotiations between it and the customer-side (B)SM 611 to arrive at the SLA. However, rather than being coupled to and communicating with the network-side CSMF 521 (if any), it is coupled to and communicates 722 with the NSMF 522 to provide orders to the NSMF 522 in accordance with the terms of the SLA, once negotiated, for the NSaaS offering 505.

In this embodiment, after negotiation 612 between customer-side and network-side (B)SMs 611, 621, the NSMF 522 can provide the MF of a Network Slice Instance (NSI) to the customer-side CSMF 521 so that the CSP 520 can use the provided NSI to support a communication service.

The NSMF 522 is coupled to and provides the NSaaS offering 505 to the customer-side CSMF 521 of the CSP 20 in accordance with the terms of the SLA once negotiated.

By way of non-limiting example, the interactions between the network-side NSMF 522 and the customer-side CSMF 521 along the exposed interface 505 include the interfaces discussed below in detail under the heading "CSMF-NSMF EXPOSED INTERFACES" and may include, without limitation, at least one of a network service template (NST) management interface (which may comprise, without limitation, at least one of a template management interface, a network requirement management interface and a network resource management interface), an NSI LM interface, an NSI lifecycle change notification interface, an NSI performance management (PM) interface, an NSI fault management (FM) interface and a network slice subnet template (NSST) management interface as discussed therein. In some embodiments, the NSI lifecycle change notification interface, the NSI PM interface, the NSI FM interface may use or be substantially similar to the interface discussed below in detail under the heading <specify> and entitled "Query Service Interface". In some embodiments, the NSST manage interface may be substantially similar to the interface discussed below in detail under the heading "NSSI-NSSMF EXPOSED INTERFACES" and entitled "NSST Management Interface".

Further, the NSMF 522 is coupled to and communicates 526 with the NSSMF 523 to obtain access to network slice subnet-related capabilities therefrom. Additionally in some embodiments, the NSMF 522 may be coupled to and communicate 526 with at least one of interface adaptor 641 in order to at least one of manage and interact with a legacy EM 454 and a legacy DM 632 (and thus indirectly manage other legacy EMs 654). Further, in some embodiments, the NSMF 522 may be coupled to and communicate 526 with interface adaptor 642 in order to at least one of manage and interact with a MANO 432.

The NSSMF 523 is coupled to and communicates 526 with the NSMF 522 to provide access to network slice subnet-related capabilities. Additionally in some embodiments, the NSSMF 522 may be coupled to and communicate with at least one of legacy EM 654 to at least one of manage and interact with it, and a legacy DM 632 to at least one of manage and interact with it (and thus indirectly at least one of manages andr interacts with other legacy EMs 654) along an itf-n interface.

The interface 641 is coupled to and communicates 526 with the NSMF 522 and with at least one of a legacy EM 654 and a legacy DM 632 along an itf-n interface to allow the NSMF 522 to at least one of manage and interact with them (and through the DM 632, to at least one of indirectly manage and interact with other legacy EMs 654) by implementing the functionality of a notional NSSMF 623 through performing interface conversion functions.

The interface adaptor 642 is coupled to and communicates 526 with the NSMF 522 and with the MANO 432 along an Os-Ma-nfvo interface to allow the NSMF 522 to at least one of manage and interact with the MANO 432 by implementing the functionality of a notional NSSMF 623 through performing interface conversion functions.

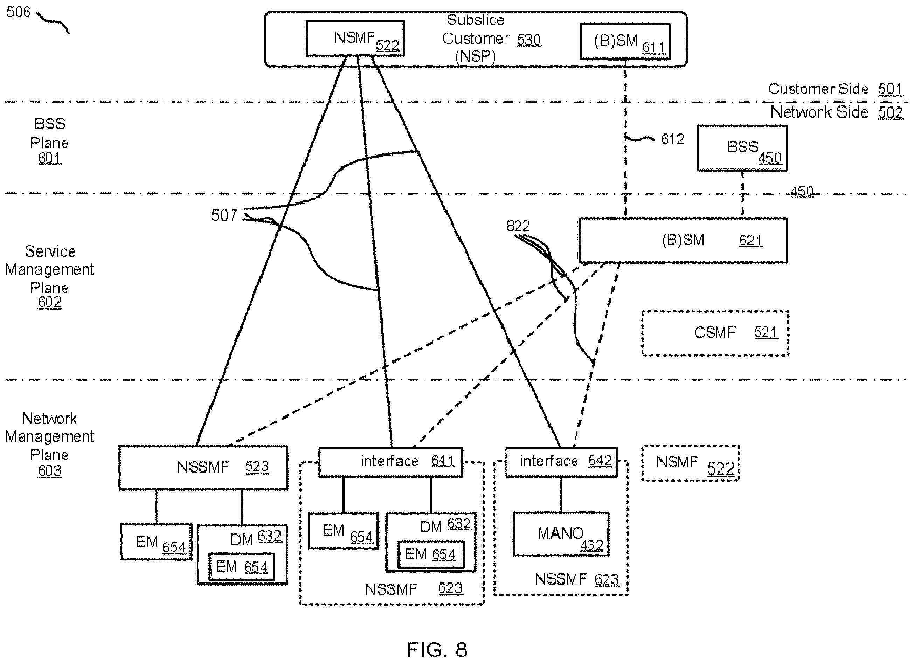

FIG. 8 is a more detailed version of the block diagram 506 of FIG. 5C illustrating relationships between customer-side and network-side MFs to support at least one NSaaS offering 507.

In FIG. 8, there may or may not be a network-side CSMF 521 (shown in dashed outline) in the service management plane 602 but if there is, it is not involved in the provision of the at least one NSSaaS offering 507.

Similarly, there may or may not be a network-side NSMF 522 (shown in dashed outline) in the network management plane 603 but if there is, it is not involved in the provision of the at least one NSSaaS offering 507.

Thus, as in FIGs. 6 and 7, the network-side (B)SM 621 is coupled to and communicates 612 with the customer-side (B)SM 611 to arrive at the SLA and is coupled to and communicates 623 with the BSS 450 to receive directions therefrom in the context of the negotiations between it and the customer-side (B)SM 611 to arrive at the SLA. However, rather than being coupled to and communicating with the network-side CSMF 521 (if any) or with the network-side NSMF 522 (if any), it is coupled to and communicates 822 with at least one of the NSSMF(s) 523 and virtual NSSMF(s) 623 to provide orders to the (virtual) NSSMF(s) 523, 623 in accordance with the terms of the SLA, once negotiated, for the at least one NSSaaS offering 507.

In this embodiment, after negotiation 612 between customer-side and network-side (B)SMs 611, 621, a (virtual) NSSMF 523, 623 can provide the MF of a Network Slice Subnet Instance (NSSI) to the customer-side NSMF 522 so that the subslice customer (NSP) 530 can use the provided NSSI to form a network slice that may be used to support communication service.

The NSSMF 523 is coupled to and provides an NSSaaS offering 507 to the customer-side NSMF 522 of the subslice customer (NSP) 530 in accordance with the terms of the SLA once negotiated.

By way of non-limiting example, the interactions between the network-side NSSMF 523 and the customer-side NSMF 521 along the exposed interface 507 include the interfaces discussed below in detail under the heading "NSMF-NSSMF EXPOSED INTERFACES" and may include, without limitation, at least one of a network subnet service template (NSST) management interface (which may comprise, without limitation, at least one of an NSST management interface a network requirement management interface and a network resource management interface), an NSSI LM interface, an NSSI lifecycle change notification interface, an NSSI PM interface and an NSSI FM interface as discussed therein. In some embodiments, at least one of the NSSI lifecycle change notification interface, the NSSI PM interface and the NSSI FM interface may be substantially similar to respectively, the NSI lifecycle change notification interface, the NSSI PM interface and the NSSI FM interface.

Further, in some embodiments, the NSSMF 522 may be coupled to and communicate with at least one a legacy EM 654 to at least one of manage or interact with it and a legacy DM 632 to at least one of manage and interact with it (and thus indirectly at least one of manage and interact with other legacy EMs 654) along an itf-n interface.

The interface adaptor 641 is coupled to and provides an NSSaaS offering 507to the customer-side NSMF 522 of the subslice customer (NSP) 530 in accordance with the terms of the SLA once negotiated. Additionally, the interface adaptor 641 is coupled to and communicates with at least one of a legacy EM 654 and a legacy DM 632 along an itf-n interface to implement the functionality of a notional NSSMF 623 through performing interface conversion functions and thus allow the customer-side NSMF 522 to at least one of manage and interact with them (and through the DM 632, to indirectly a least one of manage and interact with other legacy EMs 654).

The interface adaptor 642 is coupled to and provides an NSSaaS offering 507 to the customer-side NSMF 522 of the subslice customer (NSP) 530 in accordance with the terms of the SLA once negotiated. Additionally the interface adaptor 642 is coupled to and communicates with the MANO 432 along an Os-Ma-nfvo interface to implement the functionality of a notional NSSMF 623 through performing interface conversion functions and thus allow the customer-side NSMF 522 to at least one of manage and interact with the MANO 432.

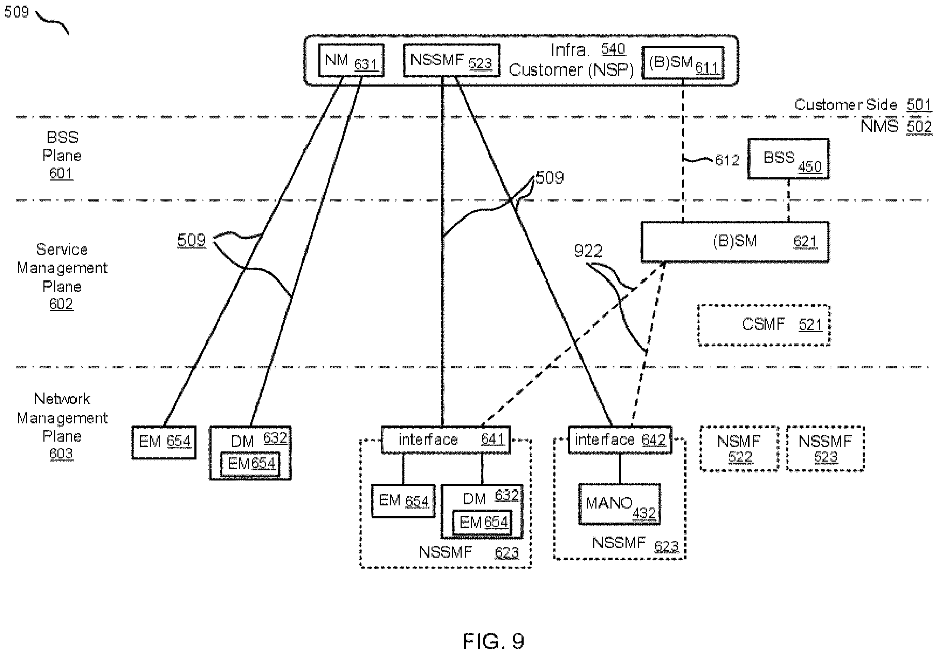

FIG. 9 is a more detailed version of the block diagram 509 of FIG. 5D illustrating relationships between customer-side and network-side MFs to support at least one laaS offering 509.

In FIG. 9, there may or may not be a network-side CSMF 521 (shown in dashed outline) in the service management plane 602 but if there is, it is not involved in the provision of the at least one laaS offering 508.

Similarly, there may or may not be at least one of a network-side NSMF 522 and network-side NSSMF 523 (shown in dashed outline) in the network management plane 603 but if there is, they are not involved in the provision of the at least one laaS offering 509.

Thus, as in FIGs. 6-8, the network-side (B)SM 621 is coupled to and communicates 612 with the customer-side (B)SM 611 to arrive at the SLA and is coupled to and communicates 623 with the BSS 450 to receive directions therefrom in the context of the negotiations between it and the customer-side (B)SM 611 to arrive at the SLA. However, rather than being coupled to and communicating with the network-side CSMF 521 (if any), with the network-side NSMF 522 (if any), or with the network-side NSSMF 523 (if any), it is coupled to and communicates 922 with at least one of the interface adaptor 641 and the interface adaptor 642 to provide orders to at least one of the legacy EMs 654 and the legacy DMs 632 (and thus indirectly to other legacy EMs 654) in accordance with the terms of the SLA, once negotiated, for the at least one laaS offering 509.

In this embodiment, after negotiation 612 between customer-side and network-side (B)SMs 611, 621, network management entities, including without limitation, at least one of interface adaptor 641, interface adaptor 642, a legacy EM 654 anda legacy DM 643 (and thus indirectly, other legacy EMs 654) used for managing different network infrastructure can provide the MF of the infrastructure to corresponding customer-side MFs of the infrastructure customer (NSP) 540, which may include, without limitation at least one of an NSSMF 523 and a legacy NM 631, so that the infrastructure customer (NSP) 540 can use the provided network infrastructure to form at least one of an NSSI and an NSI that may be used to support communication service.

The interface adaptor 641 is coupled to and provides an laaS offering 509 to the customer-side NSSMF 523 of the infrastructure customer (NSP) 540 in accordance with the terms of the SLA once negotiated. Additionally, the interface adaptor 641 is coupled to and communicates with at least one of a legacy EM 654 and a legacy DM 632 along an itf-n interface to implement the functionality of a notional NSSMF 623 through performing interface conversion functions and thus allow the customer-side NNSMF 523 to at least one of manage and interact with them (and through the DM 632, to indirectly at least one of manage and interact with other legacy EMs 654).

The interface adaptor 642 is coupled to and provides an laaS offering 509 to the customer-side NSSMF 523 of the infrastructure customer (NSP) 540 in accordance with the terms of the SLA once negotiated. Additionally the interface adaptor 642 is coupled to and communicates with the MANO 432 along an Os-Ma-nfvo interface to implement the functionality of a notional NSSMF 623 through performing interface conversion functions and thus allow the customer-side NSMF 522 to at least one of manage and interact with the MANO 432.

In some embodiments, at least one of a legacy EM 654 and a legacy DM 632 (and thus, indirectly other legacy EMs 654) may be coupled to and provide an laaS offering 509 to the customer-side legacy NM 631 of the infrastructure customer (NSP) 540 in accordance with the terms of the SLA once negotiated.

### Method Actions

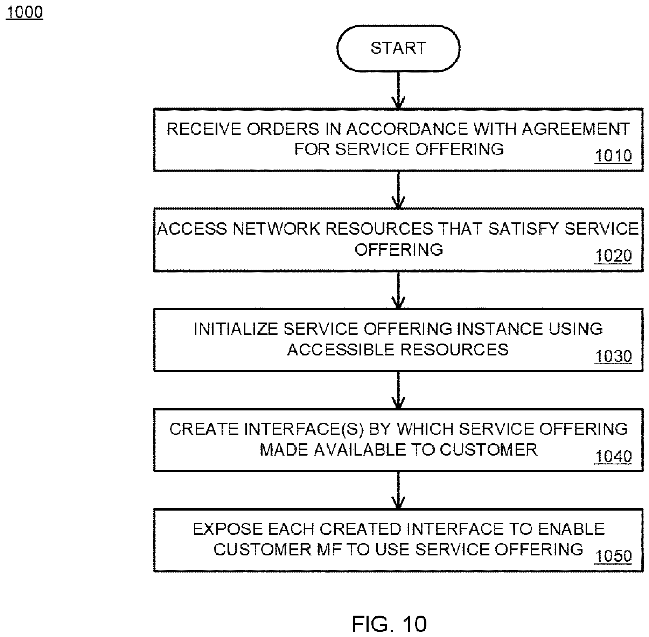

Turning now to FIG. 10, there is shown a flow chart, shown generally at 1000, showing actions taken by a network MF of a telecommunication service provider to provide telecommunication communication services to a customer.

One action 1010 is to receive an order in accordance with an agreement as to terms of a telecommunications service offering.

One action 1020 is to access network resources that satisfy the terms of the service offering.

One action 1030 is to initialize an instance of the service offering using the resources accessible thereby.

One action 1040 is to create at least one interface by which the telecommunications service offering is made available to the customer.

One action 1050 is to expose each of the at least one created interfaces to enable an MF of the customer to use the telecommunications service offering.

An advantage of this arrangement is that improves the functionality of non-5G management functional entities and provides a migration path for upgrading legacy networks to comply with 5G standards.

According to a broad aspect of the present disclosure, there is disclosed a network management system configured to: receive a request for a service, the request including service requirements, wherein the service comprises a selected one of: Communication as a Service (CaaS), Network Slice as a Service (NSaaS), Network Slice Subnet as a Service (NSSaaS), and Infrastructure as a Service (laaS); and interact with one or more non-5G management entities to: configure network resources to satisfy the service requirements; and initialize a service instance using the configured network resources.

### SM(C)-SM(P) EXPOSED INTERFACES (612)

These interfaces relate to interactions between a Customer's Service Manager (SM(C)), and a Provider's Service Manager (SM(P))

### TEMPLATE MANAGEMENT INTERFACE

This interface allows the management of templates. The following operations are defined for this interface. The MFs using this interface are the SM of both customer-side and the network-side shown in FIGs. 6-8. In some embodiments, the MFs using this interface can be any MFs described in FIG. 5.

- Template Retrieve;
- On-board Template;
- Update Template;
- Delete Template;

### Template Retrieve

| Message | Direction |
|---|---|
| TemplateRequest | SM (Customer) -> SM (Provider) |
| Template Response | SM (Provider) -> SM (Customer) |

### Input parameters

| Parameter | Description |
|---|---|
| templateType | Specifies the type of template that is requested. This parameter can Indicate any one of: Communication Service Template (CST), Network Slice Instance Template (NST), or Network Slice Subnet Instance (NSST) |

### Output parameters

| Parameter | Description |
|---|---|
| Template | Contains content data of the requested CST, NST or NSST. |

### On-board Template

| Message | Direction |
|---|---|
| OnboardTemplateRequest | SM (Customer) -> SM (Provider) |
| OnboardTemplateResponse | SM (Provider) -> SM (Customer) |

### Input parameters

| Parameter | Description |
|---|---|
| Template | As above |

### Output parameters

| Parameter | Description |
|---|---|
| TemplateInfo | Acknowledgment indicating success (ACK) or failure (NACK). |

### SERVICE REQUIREMENT MANAGEMENT INTERFACE

This interface allows the management of Service Requirements. The following operations are defined for this interface. The MFs using this interface are the SM of both customer-side and network-side shown in FIGs. 6-8. In some embodiments, the MFs using this interface can be any MFs described in FIG. 5.

- Query Service Capability;
   ∘ By using it, the network MFs can have the capacity information of the services.
- Initiate Service Requirement;
   ∘ By using it, the network MFs of the customer can send the service requirements to the service providers.
- Negotiate Service Requirement;
   ∘ By using it, the network MFs of the customer can send the negotiation message of service requirements to the service providers.
- Update Service Requirement;
   ∘ By using it, the network MFs of the customer can update the service requirements to the service providers.

### Query Service Capability

| Message | Direction |
|---|---|
| QueryServiceCapabilityRequest | SM (Customer) -> SM (Provider) |
| QueryCapabilityResponse | SM (Provider) -> SM (Customer) |

### Input parameters

| Parameter | Description |
|---|---|
| QueryServiceCapabilityRequest | An Identifier of Service that is requested, or for which Capability is requested. |

### Output parameters

| Parameter | Description |
|---|---|
| serviceCapability | A list of services and their respective capability/capacity |

### Initiate Service Requirement

| Message | Direction |
|---|---|
| initiateServiceRequirement Request | SM (Customer) -> SM (Provider) |
| initiateServiceRequireResponse | SM (Provider) -> SM (Customer) |

### Input parameters

| Parameter | Description |
|---|---|
| serviceRequire | An identification of a Service Requirement. |

### Output parameters

| Parameter | Description |
|---|---|
| ServiceRequireResults | If successful, ACK with the ID of the agreed Service Requirement. Otherwise, NACK |

### Negotiate Service Requirement

| Message | Direction |
|---|---|
| negotiateServiceRequireRequest | SM (Customer) -> SM (Provider) |
| negotiateServiceRequireResponse | SM (Provider) -> SM (Customer) |

### Input parameters

| Parameter | Description |
|---|---|
| ServiceRequire | Data defining a Service requirement. |

### Output parameters

| Parameter | Description |
|---|---|
| ServiceRequireResults | If successful, ACK with the ID of the agreed Service Requirement. Otherwise, NACK |

### Update Service Requirement

| Message | Direction |
|---|---|
| updateServiceRequireRequest | SM (Customer) -> SM (Provider) |
| updateServiceRequireResponse | SM (Provider) -> SM (Customer) |

### Input parameters

| Parameter | Description |
|---|---|
| serviceRequireID | An Identifier of the Service Requirement that needs to be updated. |
| ServiceRequire | Data defining a Service Requirement |

### Output parameters

| Parameter | Description |
|---|---|
| updateServiceRequireResults | If successful, ACK with the ID of the agreed Service Requirement. Otherwise, NACK |

### SERVICE MANAGEMENT INTERFACE

This interface facilitates the management of a service. The following operations are defined for this interface. The MFs using this interfaces are the SM of both customer-side and network-side shown in FIGs. 6-8. In some embodiments, the MFs using this interface can be any MFs described in FIG. 5.

- Instantiate service;
- Activate service;
- Deactivate service;
- Query Service
- Modify service;
- Terminate service;

### Instantiate service

| Message | Direction |
|---|---|
| instantiateServiceRequest | SM (Customer) -> SM (Provider) |
| instantiateServiceResponse | SM (Provider) -> SM (Customer) |

### Input parameters

| Parameter | Description |
|---|---|
| serviceRequireID | An Identifier of the Service Requirement that needs to be updated. |
| instantiateServiceTime | Timestamp indicating the instantiate time of the service. For example, the service may be instantiated at this timestamp. |

### Output parameters

| Parameter | Description |
|---|---|
| serviceID | An Identifier of the service that has been created. |
| csiID | An Identifier of an associated CSI |

### Activate service

| Message | Direction |
|---|---|
| activateService Request | SM (Customer) -> SM (Provider) |
| activateServiceResponse | SM (Provider) -> SM (Customer) |

### Input parameters

| Parameter | Description |
|---|---|
| serviceID | An Identifier of the Service Requirement that needs to be activated. |
| activateServiceTime | Timestamp indicating the activate time of the service. For example, the service may be activated at this timestamp. |
| csiID | An Identifier of an associated CSI |

### Output parameters

| Parameter | Description |
|---|---|
| lifecycleOperationOccurrenceID | An Identifier of the of the service operation occurrence |

### Deactivate service

| Message | Direction |
|---|---|
| deactivateServiceRequest | SM (Customer) -> SM (Provider) |
| deactivateServiceResponse | SM (Provider) -> SM (Customer) |

### Input parameters

| Parameter | Description |
|---|---|
| serviceID | An Identifier of the Service Requirement that needs to be deactivated. |
| deactivateServiceTime | Timestamp indicating the deactivate time of the service. For example, the service may be deactivated at this timestamp. |
| csiID | An Identifier of an associated CSI |

### Query service

| Message | Direction |
|---|---|
| QueryServiceRequest | SM (Customer) -> SM (Provider) |
| QueryServiceResponse | SM (Provider) -> SM (Customer) |

### Input parameters

| Parameter | Description |
|---|---|
| serviceID | An Identifier of the Service Requirement to which the query applies. |
| csiID | An Identifier of an associated CSI |
| filter | Filter defining the services to which the query applies, based on attributes of the NSI. |
| attributeselector | a list of attribute names of NSI. If present, these attributes may be returned for the instances of NSI matching the filter. In some embodiments, if this parameter is omitted, the complete list of attributes for the instances of NSI matching the filter may be returned |

### Output parameters

| Parameter | Description |
|---|---|
| queryServiceResult | Information on service(s) that match the input filter.. |
| queryCsiResult | Information on CSI(s) that match the input filter. |

### Modify service

| Message | Direction |
|---|---|
| modifyServiceRequest | SM (Customer) -> SM (Provider) |
| modifyService Response | SM (Provider) -> SM (Customer) |

### Input parameters

| Parameter | Description | |
|---|---|---|
| serviceID | An Identifier of the service to which the request applies. | |
| csiID | An Identifier of an associated CSI | |
| serviceRequireID | Identifier of the Service Requirement that needs to be used | |
| modifyType | Specifies the type of update. This parameter determines also which one of the following parameter is present in the operation. Possible values include: | |
| | | • AddNssi (adding existing NSSIs), |
| | | • RemoveNssi (removing NSSI), |
| | | • InstantiateNssi (instantiating new NSSI(s)), |
| | | • OperateNssi (changing NSSI state), |
| | | • ChangeExtNssiConnectivity (changing the external connectivity of NSSI). |
| | | • AssocNewNstVersion (associating a new NST version to the NS instance), |
| | | • MoveNssi (moving NSSI instance(s) from one origin NSI to another target NSI), |
| | | • ChangeNsiDf (changing NSI DF) |
| modifyServiceData | According to the modifyType | |
| modifyServiceTime | Timestamp indicating the modify time of the service. For example, the service may be modified at this timestamp. | |

### Output parameters

| Parameter | Description |
|---|---|
| lifecycleOperationOccurrenceID | An Identifier of the service operation occurrence |

### Terminate service

| Message | Direction |
|---|---|
| terminateServiceRequest | SM (Customer) -> SM (Provider) |
| terminateServiceResponse | SM (Provider) -> SM (Customer) |

### Input parameters

| Parameter | Description |
|---|---|
| serviceID | An Identifier of the Service Requirement that needs to be terminated. |
| terminateServiceTime | Timestamp indicating the terminate time of the service. For example, the service may be terminated at this timestamp. |
| csiID | An Identifier of an associated CSI |

### SM-CSMF EXPOSED INTERFACES

### TEMPLATE MANAGEMENT INTERFACE

This interface enables the management of templates. The following operations are defined for this interface. This is the interface 622 between (B)SM 621-CSMF 521. In some embodiments, interface 503 is the same as interface 622, and B(SM) 621 can be B(SM) 611. This interface is used to manage the CSI.
- Template retrieve;
- On-board Template;
- Update Template;
- Delete Template;

### Template Retrieve

| Message | Direction |
|---|---|
| TemplateRequest | SM -> CSMF |
| TemplateResponse | CSMF -> SM |

### Input parameters

| Parameter | Description |
|---|---|
| templateType | Specifies the type of template that is requested. This parameter can Indicate any one of: Communication Service Template (CST), Network Slice Instance Template (NST), or Network Slice Subnet Instance (NSST) |

### Output parameters

| Parameter | Description |
|---|---|
| Template | Contains content data of the requested CST, NST or NSST. |

### On-board Template

| Message | Direction |
|---|---|
| OnboardTemplateRequest | SM -> CSMF |
| OnboardTemplateResponse | CSMF -> SM |

### Input parameters

| Parameter | Description |
|---|---|
| Template | As above |

### Output parameters

| Parameter | Description |
|---|---|
| TemplateInfo | Acknowledgment indicating success (ACK) or failure (NACK). |

### SERVICE REQUIREMENT MANAGEMENT INTERFACE

This interface allows the management of Service Requirements. The following operations are defined for this interface
- Query Service Capability;
- Initiate Service Requirement;
- Negotiate Service Requirement;
- Update Service Requirement;

### Query Service Capability

| Message | Direction |
|---|---|
| QueryServiceCapabilityRequest | SM -> CSMF |
| QueryCapabilityResponse | CSMF -> SM |

### Input parameters

| Parameter | Description |
|---|---|
| QueryServiceCapabilityRequest | An Identifier of Service that is requested, or for which Capability is requested. |

### Output parameters

| Parameter | Description |
|---|---|
| serviceCapability | A list of services and their respective capability/capacity |

### Initiate Service Requirement (Admission Control)

| Message | Direction |
|---|---|
| initiateServiceRequirement Request | SM -> CSMF |
| initiateServiceRequireResponse | CSMF -> SM |

### Input parameters

| Parameter | Description |
|---|---|
| serviceRequire | An identification of a Service Requirement. |

### Output parameters

| Parameter | Description |
|---|---|
| ServiceRequireResults | If successful, ACK with the ID of the agreed Service Requirement. Otherwise, NACK |

### Negotiate Service Requirement

| Message | Direction |
|---|---|
| negotiateServiceRequireRequest | SM -> CSMF |
| negotiateServiceRequireResponse | CSMF -> SM |

### Input parameters

| Parameter | Description |
|---|---|
| ServiceRequire | Data defining a Service requirement. |

### Output parameters

| Parameter | Description |
|---|---|
| ServiceRequireResults | If successful, ACK with the ID of the agreed Service Requirement. Otherwise, NACK |

### Update Service Requirement

| Message | Direction |
|---|---|
| updateServiceRequireRequest | SM -> CSMF |
| updateServiceRequireResponse | CSMF -> SM |

### Input parameters

| Parameter | Description |
|---|---|
| serviceRequireID | An Identifier of the Service Requirement that needs to be updated. |
| ServiceRequire | Data defining a Service Requirement |

### Output parameters

| Parameter | Description |
|---|---|
| updateServiceRequireResults | If successful, ACK with the ID of the agreed Service Requirement. Otherwise, NACK |

### NETWORK RESOURCE MANAGEMENT INTERFACE

This interface allows the management of Network Resources. The following operations are defined for this interface. The MFs using this interfaces are SM and CSMF of both customer-side and network-side shown in FIGs. 6-8. In some embodiments, the MFs using this interface can be any MFs described in FIG. 5.

### • Query network resource;

### Query network resource

| Message | Direction |
|---|---|
| queryNetworkResourceRequest | SM -> CSMF |
| queryNetworkResourceResponse | CSMF -> SM |

### Input parameters

| Parameter | Description |
|---|---|
| filter | Filter defining the network resource to which the query applies |
| attributeselector | a list of attribute names of network resource. If present, these attributes may be returned for the instances of network resources matching the filter. In some embodiments, if this parameter is omitted, the complete list of attributes for the instances of network resources matching the filter may be returned |

### Output parameters

| Parameter | Description |
|---|---|
| networkResourceData | List the network resources with capability |

### SERVICE MANAGEMENT INTERFACE

This interface facilitates the management of a service. The following operations are defined for this interface
- Instantiate service;
- Activate service;
- Deactivate service;
- Query Service
- Modify service;
- Terminate service;

### Instantiate service

| Message | Direction |
|---|---|
| instantiateServiceRequest | SM -> CSMF |
| instantiateServiceResponse | CSMF -> SM |

### Input parameters

| Parameter | Description |
|---|---|
| serviceRequireID | An Identifier of the Service Requirement that needs to be updated. |
| instantiateServiceTime | Timestamp indicating the instantiate time of the service. For example, the service may be instantiated at this timestamp. |

### Output parameters

| Parameter | Description |
|---|---|
| serviceID | An Identifier of the service that has been created. |
| csiID | An Identifier of an associated CSI |

### Activate service

| Message | Direction |
|---|---|
| activateService Request | SM -> CSMF |
| activateServiceResponse | CSMF -> SM |

### Input parameters

| Parameter | Description |
|---|---|
| serviceID | An Identifier of the Service Requirement that needs to be activated. |
| activateServiceTime | Timestamp indicating the activate time of the service. For example, the service may be activated at this timestamp. |
| csiID | An Identifier of an associated CSI |

### Output parameters

| Parameter | Description |
|---|---|
| lifecycleOperationOccurrenceID | An Identifier of the of the service operation occurrence |

### Deactivate service

| Message | Direction |
|---|---|
| deactivateServiceRequest | SM -> CSMF |
| deactivateServiceResponse | CSMF -> SM |

### Input parameters

| Parameter | Description |
|---|---|
| serviceID | An Identifier of the Service Requirement that needs to be deactivated. |
| deactivateServiceTime | Timestamp indicating the deactivate time of the service. For example, the service may be deactivated at this timestamp. |
| csiID | An Identifier of an associated CSI |

### Query service

| Message | Direction |
|---|---|
| QueryServiceRequest | SM -> CSMF |
| QueryServiceResponse | CSMF -> SM |

### Input parameters

| Parameter | Description |
|---|---|
| serviceID | An Identifier of the Service Requirement to which the query applies. |
| csiID filter | An Identifier of an associated CSI Filter defining the services to which the query applies, based on attributes of the NSI. |
| attributeselector | a list of attribute names of NSI. If present, these attributes may be returned for the instances of NSI matching the filter. In some embodiments, if this parameter is omitted, the complete list of attributes for the instances of NSI matching the filter may be returned |

### Output parameters

| Parameter | Description |
|---|---|
| queryServiceResult | Information on service(s) that match the input filter. |
| queryCsiResult | Information on CSI(s) that match the input filter. |

### Modify service

| Message | Direction |
|---|---|
| modifyServiceRequest | SM -> CSMF |
| modifyService Response | CSMF -> SM |

### Input parameters

| Parameter | Description | |
|---|---|---|
| serviceID | An Identifier of the service to which the request applies. | |
| csiID | An Identifier of an associated CSI | |
| serviceRequireID | Identifier of the Service Requirement that needs to be used | |
| modifyType | Specifies the type of update. This parameter determines also which one of the following parameter is present in the operation. Possible values include: | |
| | | • AddNssi (adding existing NSSIs), |
| | | • RemoveNssi (removing NSSI), |
| | | • InstantiateNssi (instantiating new NSSI(s)), |
| | | • OperateNssi (changing NSSI state), |
| | | • ChangeExtNssiConnectivity (changing the external connectivity of NSSI). |
| | | • AddCsiSap (adding SAP(s)), |
| | | • RemoveCsiSap (removing SAP(s)), |
| | | • AssocNewNstVersion (associating a new NST version to the NS instance), |
| | | • MoveNssi (moving NSSI instance(s) from one origin NSI to another target NSI), |
| | | • ChangeNsiDf (changing NSI DF) |
| modifyServiceData | According to the modifyType | |
| modifyServiceTime | Timestamp indicating the modify time of the service. For example, the service may be modified at this timestamp. | |

### Output parameters

| Parameter | Description |
|---|---|
| lifecycleOperationOccurrenceID | An Identifier of the service operation occurrence |

### Terminate service

| Message | Direction |
|---|---|
| terminateServiceRequest | SM -> CSMF |
| terminateServiceResponse | CSMF -> SM |

### Input parameters

| Parameter | Description |
|---|---|
| serviceID | An Identifier of the Service Requirement that needs to be terminated. |
| terminateServiceTime | Timestamp indicating the terminate time of the service. For example, the service may be terminated at this timestamp. |
| csiID | An Identifier of an associated CSI |

### CSI LM INTERFACE (503)

This interface allows the management of service. The following operations are defined for this interface
- Instantiate CSI;
- Activate CSI;
- Deactivate CSI;
- Modify CSI;
- Query CSI;
- Terminate CSI;

### Instantiate CSI

| Message | Direction |
|---|---|
| instantiateCsiRequest | SM -> CSMF |
| instantiateCsiResponse | CSMF -> SM |

### Input parameters

| Parameter | Description |
|---|---|
| CstID | An Identifier of the CST that needs to be used. |
| instantiateCstTime | Timestamp indicating the instantiate time of the CSI. For example, the CSI may be instantiated at this timestamp. |

### Output parameters

| Parameter | Description |
|---|---|
| csiID | An Identifier of the CSI |

### Activate service

| Message | Direction |
|---|---|
| activateCsiRequest | SM -> CSMF |
| activateCsiResponse | CSMF -> SM |

### Input parameters

| Parameter | Description |
|---|---|
| CsiD | An Identifier of the CSI that needs to be activated. |
| activateCsiTime | Timestamp indicating the activate time of the service. For example, the service may be activated at this timestamp. |

### Output parameters

| Parameter | Description |
|---|---|
| CsilifecycleOperationOccurrenceID | An Identifier of the of the CSI operation occurrence |

### Deactivate CSI

| Message | Direction |
|---|---|
| deactivateCsiRequest | SM -> CSMF |
| deactivateCsiResponse | CSMF -> SM |

### Input parameters

| Parameter | Description |
|---|---|
| CsiID | An Identifier of the CSI that needs to be deactivated. |
| deactivateCsiTime | Timestamp indicating the deactivate time of the CSI. For example, the CSI may be deactivated at this timestamp. |
| csiID | An Identifier of an associated CSI |

### Query CSI

| Message | Direction |
|---|---|
| QueryCsiRequest | SM -> CSMF |
| QueryCsiResponse | CSMF -> SM |

### Input parameters

| Parameter | Description |
|---|---|
| serviceID | An Identifier of the Service Requirement to which the query applies. |
| csiID | An Identifier of an associated CSI |
| filter | Filter defining the services to which the query applies, based on attributes of the NSI. |
| attributeSelector | a list of attribute names of CSI. If present, these attributes may be returned for the instances of CSI matching the filter. In some embodiments, if this parameter is omitted, the complete list of attributes for the instances of CSI matching the filter may be returned |

### Output parameters

| Parameter | Description |
|---|---|
| queryCsiResult | Information on CSI(s) that match the input filter. |

### Modify CSI

| Message | Direction |
|---|---|
| modifyCsiRequest | SM -> CSMF |
| modifyCsiResponse | CSMF -> SM |

### Input parameters

| Parameter | Description | |
|---|---|---|
| csiID | An Identifier of an associated CSI | |
| cstID | An Identifier of the CST that needs to be used | |
| serviceRequirelD | Identifier of the Service Requirement that needs to be used | |
| modifyCsiType | Specifies the type of update. This parameter determines also which one of the following parameter is present in the operation. Possible values include: | |
| | | • AddNssi (adding existing NSSIs), |
| | | • RemoveNssi (removing NSSI), |
| | | • InstantiateNssi (instantiating new NSSI(s)), |
| | | • OperateNssi (changing NSSI state), |
| | | • ChangeExtNssiConnectivity (changing the external connectivity of NSSI). |
| | | • AddNsiSap (adding SAP(s)), |
| | | • RemoveNsiSap (removing SAP(s)), |
| | | • AssocNewNstVersion (associating a new NST version to the NS instance), |
| | | • MoveNssi (moving NSSI instance(s) from one origin NSI to another target NSI), |
| | | • ChangeNsiDf (changing NSI DF) |
| modifyCsiData | According to the modifyCsiType | |
| modifyCsiTime | Timestamp indicating the modify time of the CSI. For example, the CSI may be modified at this timestamp. | |

### Output parameters

| Parameter | Description |
|---|---|
| lifecycleOperationOccurrenceCsi ID | An Identifier of the service operation occurrence |

### Terminate CSI

| Message | Direction |
|---|---|
| terminateCsiRequest | SM -> CSMF |
| terminateCsiResponse | CSMF -> SM |

### Input parameters

| Parameter | Description |
|---|---|
| CsiID | An Identifier of the CSI that needs to be terminated. |
| terminateCsiTime | Timestamp indicating the terminate time of the CSI. For example, the CSI may be terminated at this timestamp. |

### CSMF-NSMF EXPOSED INTERFACES (525)

This is the interface 525 between CSMF 521-NSMF 522. In some embodiments, interface 505 is the same as interface 525. This interface is used to manage the NSI that is used to serve the CSI.

### TEMPLATE MANAGEMENT INTERFACE

This interface allows the management of templates. The following operations are defined for this interface.
- Template retrieve;
- On-board Template;
- Update Template;
- Delete Template;

NOTE: (B)SM can be used to replace CSMF when Network slice instance as a service is requested.

### Template Retrieve

| Message | Direction |
|---|---|
| TemplateRequest | CSMF -> NSMF |
| TemplateResponse | NSMF -> CSMF |

### Input parameters

| Parameter | Description |
|---|---|
| templateType | Specifies the type of template that is requested. This parameter can Indicate any one of: Communication Service Template (CST), Network Slice Instance Template (NST), or Network Slice Subnet Instance (NSST) |

### Output parameters

| Parameter | Description |
|---|---|
| Template | Contains content data of the requested CST, NST or NSST. |

### On-board Template

| Message | Direction |
|---|---|
| OnboardTemplateRequest | CSMF -> NSMF |
| OnboardTemplateResponse | NSMF -> CSMF |

### Input parameters

| Parameter | Description |
|---|---|
| Template | As above |

### Output parameters

| Parameter | Description |
|---|---|
| TemplateInfo | Acknowledgment indicating success (ACK) or failure (NACK). |

### NETWORK REQUIREMENT MANAGEMENT INTERFACE

This interface allows the management of Service Requirements. The following operations are defined for this interface
- Query Service Capability;
- Initiate Service Requirement;
- Negotiate Service Requirement;
- Update Service Requirement;

NOTE: (B)SM can be used to replace CSMF when Network slice instance as a service is requested.

### Query Service Capability

| Message | Direction |
|---|---|
| QueryServiceCapabilityRequest | CSMF -> NSMF |
| QueryCapabilityResponse | NSMF -> CSMF |

### Input parameters

| Parameter | Description |
|---|---|
| QueryServiceCapabilityRequest | An Identifier of Service that is requested, or for which Capability is requested. |

### Output parameters

| Parameter | Description |
|---|---|
| serviceCapabi lity | A list of services and their respective capability/capacity |

### Initiate Service Requirement (Admission Control)

| Message | Direction |
|---|---|
| initiateServiceRequireRequest | CSMF -> NSMF |
| initiateServiceRequireResponse | NSMF -> CSMF |

### Input parameters

| Parameter | Description |
|---|---|
| serviceRequire | An identification of a Service Requirement. |
| nst | If NST is exposed to CSMF, NST can be used in this step. |

### Output parameters

| Parameter | Description |
|---|---|
| ServiceRequireResults | If successful, ACK with the ID of the agreed Service Requirement. Otherwise, NACK |

### Negotiate Service Requirement

| Message | Direction |
|---|---|
| negotiateServiceRequireRequest | CSMF -> NSMF |
| negotiateServiceRequireResponse | NSMF -> CSMF |

### Input parameters

| Parameter | Description |
|---|---|
| ServiceRequire | Data defining a Service requirement. |

### Output parameters

| Parameter | Description |
|---|---|
| ServiceRequireResults | If successful, ACK with the ID of the agreed Service Requirement. Otherwise, NACK |

### Update Service Requirement

| Message | Direction |
|---|---|
| updateServiceRequireRequest | CSMF -> NSMF |
| updateServiceRequireResponse | NSMF -> CSMF |

### Input parameters

| Parameter | Description |
|---|---|
| serviceRequireID | An Identifier of the Service Requirement that needs to be updated. |
| ServiceRequire | Data defining a Service Requirement |

### Output parameters

| Parameter | Description |
|---|---|
| updateServiceRequireResults | If successful, ACK with the ID of the agreed Service Requirement. Otherwise, NACK |

### NETWORK RESOURCE MANAGEMENT INTERFACE

This interface allows the management of Network Resources. The following operations are defined for this interface

### • Query network resource;

### Query network resource

| Message | Direction |
|---|---|
| queryNetworkResourceRequest | CSMF -> NSMF |
| queryNetworkResourceResponse | NSMF -> CSMF |

### Input parameters

| Parameter | Description |
|---|---|
| filter | Filter defining the network resource to which the query applies |
| attributeselector | a list of attribute names of network resource. If present, these attributes may be returned for the instances of network resources matching the filter. In some embodiments, if this parameter is omitted, the complete list of attributes for the instances of network resources matching the filter may be returned |

### Output parameters

| Parameter | Description |
|---|---|
| networkResourceData | List the network resources with capability |

### NSI LM INTERFACE

This interface allows the management of services. The following operations are defined for this interface
- Instantiate NSI;
- Activate NSI;
- Deactivate NSI;
- Modify NSI;
- Query NSI;
- Terminate NSI;

### Instantiate NSI

| Message | Direction |
|---|---|
| instantiateNsiRequest | CSMF -> NSMF |
| instantiateNsiResponse | NSMF -> CSMF |

### Input parameters

| Parameter | Description |
|---|---|
| NstID | An Identifier of the NST that needs to be used. |
| instantiateNsiTime | Timestamp indicating the instantiate time of the NSI. For example, the NSI may be instantiated at this timestamp. |

### Output parameters

| Parameter | Description |
|---|---|
| nsiID | An Identifier of the NSI |

### Activate NSI

| Message | Direction |
|---|---|
| activateNsiRequest | CSMF -> NSMF |
| activateNsiResponse | NSMF -> CSMF |

### Input parameters

| Parameter | Description |
|---|---|
| NsiD | An Identifier of the CSI that needs to be activated. |
| activateNsiTime | Timestamp indicating the activate time of the NSI. For example, the NSI may be activated at this timestamp. |

### Output parameters

| Parameter | Description |
|---|---|
| NsilifecycleOperationOccurrenceID | An Identifier of the of the NSI operation occurrence |

### Deactivate NSI

| Message | Direction |
|---|---|
| deactivateNsiRequest | CSMF -> NSMF |
| deactivateNsiResponse | NSMF -> CSMF |

### Input parameters

| Parameter | Description |
|---|---|
| NsiID | An Identifier of the NSI that needs to be deactivated. |
| deactivateNsiTime | Timestamp indicating the deactivate time of the NSI. For example, the NSI may be deactivated at this timestamp. |
| nsiID | An Identifier of an associated NSI |

### Query NSI

| Message | Direction |
|---|---|
| QueryNsiRequest | CSMF -> NSMF |
| QueryNsiResponse | NSMF -> CSMF |

### Input parameters

| Parameter | Description |
|---|---|
| nsiID | An Identifier of an associated NSI |
| filter | Filter defining the services to which the query applies, based on attributes of the NSI. |
| attributeSelector | a list of attribute names of NSI. If present, these attributes may be returned for the instances of NSI matching the filter. In some embodiments, if this parameter is omitted, the complete list of attributes for the instances of NSI matching the filter may be returned |

### Output parameters

| Parameter | Description |
|---|---|
| queryNsiResult | Information on NSI(s) that match the input filter. |

### Modify NSI

| Message | Direction |
|---|---|
| modifyNsiRequest | CSMF -> NSMF |
| modifyNsiResponse | NSMF -> CSMF |

### Input parameters

| Parameter | Description | |
|---|---|---|
| nsiID | An Identifier of an associated NSI | |
| NstID | An Identifier of the NST that needs to be used | |
| serviceRequirelD | Identifier of the Service Requirement that needs to be used | |
| modifyNsiType | Specifies the type of update. This parameter determines also which one of the following parameter is present in the operation. Possible values include: | |
| | | • AddNssi (adding existing NSSIs), |
| | | • RemoveNssi (removing NSSI), |
| | | • InstantiateNssi (instantiating new NSSI(s)), |
| | | • OperateNssi (changing NSSI state), |
| | | • ChangeExtNssiConnectivity (changing the external connectivity of NSSI). |
| | | • AddNsiSap (adding SAP(s)), |
| | | • RemoveNsiSap (removing SAP(s)), |
| | | • AddNssiSap (adding SAP(s)), |
| | | • RemoveNssiSap (removing SAP(s)), |
| | | • AssocNewNstVersion (associating a new NST version to the NS instance), |
| | | • MoveNssi (moving NSSI instance(s) from one origin NSI to another target NSI), |
| | | • ChangeNsiDf (changing NSI DF) |
| modifyNsiData | According to the modifyNsiType | |
| modifyNsiTime | Timestamp indicating the modify time of the NSI. For example, the NSI may be modified at this timestamp. | |

### Output parameters

| Parameter | Description |
|---|---|
| lifecycleOperationOccurrenceNsi ID | An Identifier of the service operation occurrence |

### Terminate NSI

| Message | Direction |
|---|---|
| terminateNsiRequest | CSMF -> NSMF |
| terminateNsiResponse | NSMF -> CSMF |

### Input parameters

| Parameter | Description |
|---|---|
| NsiID | An Identifier of the NSI that needs to be terminated. |
| terminateNsiTime | Timestamp indicating the terminate time of the NSI. For example, the NSI may be terminated at this timestamp. |

### NSMF-NSSMF EXPOSED INTERFACES (526)

This is the interface 526 between NSMF 522-NSSMF 523 and or interface adaptor 641. In some embodiments, interface 507 is the same as interface 526. This interface is used to manage the NSSI that is used to serve the NSI.

### NSST MANAGEMENT INTERFACE

This interface allows the management of templates. The following operations are defined for this interface
- Template retrieve;
- On-board NSST;
- Update NSST;
- Delete NSST;

NOTE: (B)SM can be used to replace NSMF when Network slice instance as a service is requested.

### Template Retrieve

| Message | Direction |
|---|---|
| TemplateRequest | NSMF -> NSSMF |
| TemplateResponse | NSSMF -> NSMF |

### Output parameters

| Parameter | Description |
|---|---|
| nsstData | Contains content data of the requested NSST. |

### On-board Template

| Message | Direction |
|---|---|
| OnboardNsstRequest | NSMF -> NSSMF |
| OnboardNsstResponse | NSSMF -> NSMF |

### Input parameters

| Parameter | Description |
|---|---|
| nsst | NSST with parameter used to instantiate the NSSI |

### Output parameters

| Parameter | Description |
|---|---|
| nsstID | Identifier of the Template |

### Update NSST

| Message | Direction |
|---|---|
| UpdateNsstRequest | NSMF -> NSSMF |
| UpdateNsstResponse | NSSMF -> NSMF |

### Input parameters

| Parameter | Description |
|---|---|
| nsstID | Identifier of the template |
| nsst | NSST with parameter used to instantiate the NSSI |

### Output parameters

| Parameter | Description |
|---|---|
| nsstID | Identifier of the new NSST |

### NETWORK REQUIREMENT MANAGEMENT INTERFACE

This interface allows the management of Service Requirements. The following operations are defined for this interface
- Query Service Capability;
- Initiate Service Requirement;
- Negotiate Service Requirement;
- Update Service Requirement;

NOTE: (B)SM can be used to replace NSMF when Network slice instance as a service is requested.

### Query Service Capability

| Message | Direction |
|---|---|
| QueryServiceCapabilityRequest | NSMF -> NSSMF |
| QueryCapabilityResponse | NSSMF -> NSMF |

### Input parameters

| Parameter | Description |
|---|---|
| QueryServiceCapabilityRequest | An Identifier of Service that is requested, or for which Capability is requested. |

### Output parameters

| Parameter | Description |
|---|---|
| serviceCapability | A list of services and their respective capability/capacity |

### Initiate Service Requirement (Admission Control)

| Message | Direction |
|---|---|
| initiateServiceRequireRequest | CSMF -> NSMF |
| initiateServiceRequireResponse | NSMF -> CSMF |

### Input parameters

| Parameter | Description |
|---|---|
| serviceRequire | An identification of a Service Requirement. |

### Output parameters

| Parameter | Description |
|---|---|
| ServiceRequireResults | If successful, ACK with the ID of the agreed Service Requirement. Otherwise, NACK |

### Negotiate Service Requirement

| Message | Direction |
|---|---|
| negotiateServiceRequireRequest | NSMF -> NSSMF |
| negotiateServiceRequireResponse | NSSMF -> NSMF |

### Input parameters

| Parameter | Description |
|---|---|
| ServiceRequire | Data defining a Service requirement. |

### Output parameters

| Parameter | Description |
|---|---|
| ServiceRequireResults | If successful, ACK with the ID of the agreed Service Requirement. Otherwise, NACK |

### Update Service Requirement

| Message | Direction |
|---|---|
| updateServiceRequireRequest | NSMF -> NSSMF |
| updateServiceRequireResponse | NSSMF -> NSMF |

### Input parameters

| Parameter | Description |
|---|---|
| serviceRequireID | An Identifier of the Service Requirement that needs to be updated. |
| ServiceRequire | Data defining a Service Requirement |

### Output parameters

| Parameter | Description |
|---|---|
| updateServiceRequireResults | If successful, ACK with the ID of the agreed Service Requirement. Otherwise, NACK |

### NETWORK RESOURCE MANAGEMENT INTERFACE

This interface allows the management of Network Resources. The following operations are defined for this interface

### • Query network resource;

### Query network resource

| Message | Direction |
|---|---|
| queryNetworkResourceRequest | NSMF -> NSSMF |
| queryNetworkResourceResponse | NSSMF -> NSMF |

### Input parameters

| Parameter | Description |
|---|---|
| filter | Filter defining the network resource to which the query applies |
| attributeselector | a list of attribute names of network resource. If present, these attributes may be returned for the instances of network resources matching the filter. In some embodiments, if this parameter is omitted, the complete list of attributes for the instances of network resources matching the filter may be returned |

### Output parameters

| Parameter | Description |
|---|---|
| networkResourceData | List the network resources with capability |

### NSSI LM INTERFACE

This interface allows the management of service. The following operations are defined for this interface
- Instantiate NSSI using Service Requirements;
- Activate NSSI;
- Deactivate NSSI;
- Modify NSSI;
- Query NSSI;
- Terminate NSSI;

### Instantiate NSSI using Service Requirements

| Message | Direction |
|---|---|
| instantiateNssiRequest | NSMF -> NSSMF |
| instantiateNssiResponse | NSSMF -> NSMF |

### Input parameters

| Parameter | Description |
|---|---|
| ServiceRequireID | An Identifier of the Service Requirements that needs to be used for the service. |
| instantiateNssiTime | Timestamp indicating the instantiate time of the NSSI. For example, the NSSI may be instantiated at this timestamp. |

### Output parameters

| Parameter | Description |
|---|---|
| nssiID | An Identifier of the NSSI |

### Instantiate NSSI using NSST

| Message | Direction |
|---|---|
| instantiateNssiRequest | NSMF -> NSSMF |
| instantiateNssiResponse | NSSMF -> NSMF |

### Input parameters

| Parameter | Description |
|---|---|
| nsstID | An Identifier of the NSST that needs to be used for the service. |
| instantiateNssiTime | Timestamp indicating the instantiate time of the NSSI. For example, the NSSI may be instantiated at this timestamp. |

### Output parameters

| Parameter | Description |
|---|---|
| nssiID | An Identifier of the NSSI |

### Activate NSSI

| Message | Direction |
|---|---|
| activateNssiRequest | NSMF -> NSSMF |
| activateNssiResponse | NSSMF -> NSMF |

### Input parameters

| Parameter | Description |
|---|---|
| NssiID | An Identifier of the NSSI that needs to be activated. |
| activateNssiTime | Timestamp indicating the activate time of the NSSI. For example, the NSI may be activated at this timestamp. |

### Output parameters

| Parameter | Description |
|---|---|
| NssiLifecycleOperationOccurrenceID | An Identifier of the of the NSSI operation occurrence |

### Deactivate NSSI

| Message | Direction |
|---|---|
| deactivateNssiRequest | NSMF -> NSSMF |
| deactivateNssiResponse | NSSMF -> NSMF |

### Input parameters

| Parameter | Description |
|---|---|
| NssiID | An Identifier of the NSSI that needs to be deactivated. |
| deactivateNssiTime | Timestamp indicating the deactivate time of the NSSI. For example, the NSI may be deactivated at this timestamp. |

### Query NSSI

| Message | Direction |
|---|---|
| QueryNssiRequest | NSMF -> NSSMF |
| QueryNssiResponse | NSSMF -> NSMF |

### Input parameters

| Parameter | Description |
|---|---|
| nssiID | An Identifier of an associated NSSI |
| filter | Filter defining the services to which the query applies, based on attributes of the NSSI. |
| attributeSelector | a list of attribute names of NSSI. If present, these attributes may be returned for the instances of NSSI matching the filter. In some embodiments, if this parameter is omitted, the complete list of attributes for the instances of NSSI matching the filter may be returned |

### Output parameters

| Parameter | Description |
|---|---|
| queryNssiResult | Information on NSSI(s) that match the input filter. |

### Modify NSSI

| Message | Direction |
|---|---|
| modifyNssiRequest | NSMF -> NSSMF |
| modifyNssiResponse | NSSMF -> NSMF |

### Input parameters

| Parameter | Description | |
|---|---|---|
| nssiID | An Identifier of an associated NSSI | |
| NsstID | An Identifier of the NSST that needs to be used | |
| modifyNssiType | Specifies the type of update. This parameter determines also which one of the following parameter is present in the operation. Possible values include: | |
| | | • AddNssi (adding existing NSSIs), |
| | | • RemoveNssi (removing NSSI), |
| | | • InstantiateNssi (instantiating new NSSI(s)), |
| | | • OperateNssi (changing NSSI state), |
| | | • ChangeExtNssiConnectivity (changing the external connectivity of NSSI). |
| | | • AddInfSap (adding SAP(s)), |
| | | • RemovelnfSap (removing SAP(s)), |
| | | • AssocNewNstVersion (associating a new NST version to the NS instance), |
| | | • MoveNssi (moving NSSI instance(s) from one origin NSI to another target NSI), |
| | | • ChangeNsiDf (changing NSI DF) |
| modifyNssiData | According to the modifyNssiType | |
| modifyNssiTime | Timestamp indicating the modify time of the NSSI. For example, the NSSI may be modified at this timestamp. | |

### Output parameters

| Parameter | Description |
|---|---|
| LifecycleOperationOccurrenceNssiID | An Identifier of the service operation occurrence |

### Terminate NSSI

| Message | Direction |
|---|---|
| terminateNssiRequest | NSMF -> NSSMF |
| terminateNssiResponse | NSSMF -> NSMF |

### Input parameters

| Parameter | Description |
|---|---|
| NssiID | An Identifier of the NSSI that needs to be terminated. |
| terminateNssiTime | Timestamp indicating the terminate time of the NSSI. For example, the NSSI may be terminated at this timestamp. |

### INTERFACE CONVERSIONS

### Nsmf-nssmf to Os-Ma-Nfvo

NOTE: (B)SM can be used to replace NSMF when Network slice instance as a service is requested.
- NSST, SERVICEREQUIRE management interface to NSD interface
- NSSI LM interface to NS LM interface
- NSSI PM interface to NS PM interface
- NSSI FM interface to NS FM interface

### Nsmf-nssmf to itf-n

NOTE: (B)SM can be used to replace NSSMF when Network slice instance as a service is requested.
- NSSI LM interface to Generic/Common Interface IRPs
- NSSI LM interface to CM related interface IRPs
- NSSI LM interface to SON related Interface IRPs
- NSSI PM interface to PM file format/collection & Trace related Interface IRPs
- NSSI FM interface to FM related Interface IRPs

### TEMPLATE AND SERVICEREQUIRE PARAMETERS/ATTRIBUTES CST Data

### In this section, attributes of a CST are listed.

| **Parameter** | **Content** | **Description** |
|---|---|---|
| **Type** | String | This parameter describes the communication service type, e.g., eMBB. |
| **Area** | geographicData | |
| **Domain** | | |
| **Traffic Volume** | TrafficVolumeData | This parameter describes the volume of traffic of the requested service. |
| **Users Distribution** | UsersDistributionData | This parameter describes the distribution of users of the requested service. |
| **ServicRequire** | ServiceRequireData | |

| **ServiceRequire Parameter** | **Content** | **Description** |
|---|---|---|
| **Availability** | String | This parameter describes the communication service type, e.g., eMBB. |
| **Utilization** | geographicDat a | |
| **Domain** | | |
| **SERVICEREQUIR E** | ServiceRequire Data | |

### NST Data

### In this section, attributes of a NST are listed

| **Parameter** | **Content** | **Description** |
|---|---|---|
| **Type** | String | This parameters describe the communication service type, e.g., eMBB. etc. |
| **Area** | geographicData | |

| **domain** | **domainData** | **RAN or CN. Related NFs** |
|---|---|---|
| **DeploymentSetup** | deploymentSetup Data | |

### NSST Data

### In this section, attributes of a NSST are listed

| **Parameter** | **Content** | **Description** |
|---|---|---|
| **Type** | String | This parameter describes the communication service type, e.g., eMBB. |
| **Area** | geographicData | |
| **domain** | domainData | RAN or CN. Related NFs |
| **DeploymentSetup** | DeploymentSetup | |

Network management entities carrying out or controlling the methods described above may be resident within a management plane of a communications network. These entities may interact with control plane entities (and possibly user/data plane entities) within the network slices instances that are created and discussed. These network management entities may provide methods and functions for the utilization of slice templates and slice instance profiles to satisfy or address (wholly or in part) communication service requests. These communication service requests may be received from a customer of a service provider. Addressing the communication service requests may include taking into account aspects of the lifecycle management of communication service instances and network slices instances.

### 3GPP TSG SA WG5 (Telecom Management) Meeting #115 S5-17xyzr 16-20 October 2017, Busan, Korea revision of S5A-17xabc

| | |
|---|---|
| **Source:** | **Huawei** |
| **Title:** | **pCR 28.530 Clarify communication service instance lifecycle** |
| **Document for:** | **Approval** |
| **Agenda Item:** | **x.x.x** |

### 1 DECISION/ACTION REQUESTED

### REFERENCES

[1] 3GPP TR 28.801: "Study on management and orchestration of network slicing for next generation network v2.0.1".
[2] Draft 3GPP TS 28.531: "Provisioning of network slicing for 5G networks and services v0.0.0".

### 3 RATIONALE

The objective of this paper is to illustrate various stages the 3GPP system undergoes when providing a communication service instance, i.e., communication service instance (CSI) lifecycle. In 3GPP TR 28.801 [1], the NSI lifecycle is presented. There is a specific relationship with the network slice lifecycle and the communication service instance lifecycle. Therefore, in the new draft specification 3GPP TS 28.531 [2], it is proposed to add the communication service instance lifecycle with the relationship between NSI lifecycle and overall communication service provision for business services.

### 4 DETAILED PROPOSAL

It is proposed to make the following changes to 3GPP TS 28.530.

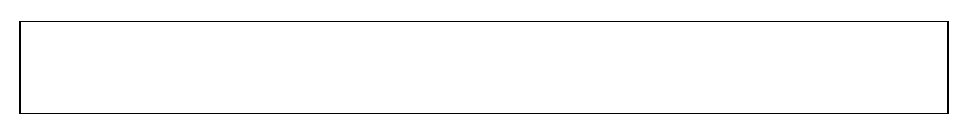

### 4 Background and concepts

### 4.x Communication Service Instance Lifecycle

Communication service instance (CSI) is an instance of an end-user service or a business service that may be realized by a network slice. There are two cases related to the lifecycle of a CSI and a NSI lifecycle: An instance of an end-user service or a business service that may be realized by a network slice.
1. A NSI may be exclusively used for a single communication service instance, which means that the preparation of the NSI is triggered by the associated CSI.
2. An NSI may be used by multiple communication service instances, for which the lifecycle of the service instance is related with the run-time phase of the shared NSI, and triggers modification(s) on the NSI.

CSI lifecycle management includes service negotiation, service instance preparation, service instance deployment, service instance operation, and service instance termination phases. Figure 1 illustrate the phases of CSI lifecycle.

Each phase defines high level tasks and should include appropriate verification of the output of each task in the phase.

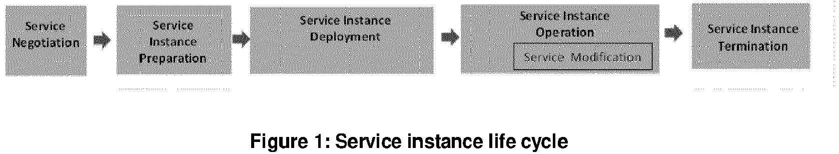

Service negotiation: Service agreements are established in this phase. For this purpose, a feasibility check may be conducted to evaluate the service request against the available capacity and resources.

Service instance preparation: Service requirements are translated into network requirements, such as VNFs, PNFs, transport and capacity requirements. Identification of the NSI to be utilized for the service instance is done at this phase. If new NSIs are to be created for these requirements, Service Instance Preparation phase triggers NSI Preparation phase in the NSI lifecycle. If the service will be deployed on a pre-existing NSI, Service Instance Preparation phase triggers NSI Modification operation in the NSI lifecycle.

Service instance deployment: If a new NSI is to be used for the service instance, the new NSI is created, and association of service instance to the NSI is established. The associated NSIs with the service instance are instantiated, configured and activated. If an existing NSI is to be used for the service instance, modification of the existing NSI, e.g., re-configuration, are completed. The CSI is ready to start operation.

Service instance operation: In this phase, supervision, reporting and modification of the service is conducted, which correspond to similar NSI Run-time phase operations. If multiple service instances use the same NSI, the Run-time operations of the NSI are performed on a per service basis. A CSI can be modified during the Operation phase, which may trigger NSI modification.

CSI termination: If the NSI is serving only one communication service instance, when the service is terminated the NSI is also decommissioned. If the NSI is serving multiple communication service instances, the modification phase of the NSI is used to add or delete a service when the NSI already exists. Service level agreements are terminated in this phase.

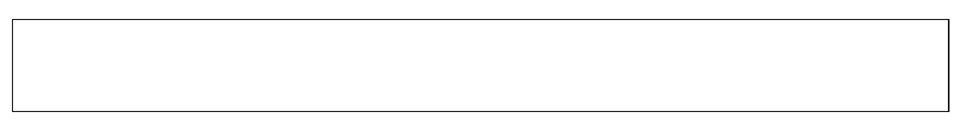

### 3GPP TSG SA WG5 (Telecom Management) Meeting #115 S5-175128 16-20 October 2017, Busan, Korea revision of S5-17xabc

| | |
|---|---|
| **Source:** | **Huawei** |
| **Title:** | **Management architecture relation between Service management functions and slicing management functions** |
| **Document for:** | **Approval** |
| **Agenda Item:** | **6.5.2** |

### 1 DECISION/ACTION REQUESTED

### 2 REFERENCES

[1] Draft TR 28.800 : " Study on management and orchestration architecture of next generation networks and services V0.8.0".
[2] Draft TR 28.801 : "Study on management and orchestration of network slicing for next generation network v2.0.1".
[3] TS 28.500: "Management concept, architecture and requirements for mobile networks that include virtualized network functions v14.1.0 ".

### 3 RATIONALE

In TR28.801 service management function is used in service provision descriptions and certain use cases.

### ----------Extract from TR 28.801 [1]----------

### 4.8 Types of communication services

Communication services offered by Communication Service Providers to Communication Service Customers are of various categories, among which:
- B2C services, e.g. mobile web browsing, VoLTE, Rich Communication Services, etc.
- B2B services, e.g. Internet access, LAN interconnection, etc.
- B2B2X services: e.g. services offered to other Communication Service Providers (e.g. international roaming, RAN sharing, etc.) or to Verticals (e.g. eMBB, etc.) offering themselves communication services to their own customers. B2B2X service type includes B2B2 applied recursively, i.e. B2B2B, B2B2B2B, etc.

A communication service offered by Communication Service Providers can include a bundle of specific B2C, B2B or B2B2X type of services. Taking as an example the B2C type of services, a bundle could include: data (for mobile web browsing), voice (through VoLTE), and messaging (via Rich Communication Services). In this case, each one of the individual B2C may be fulfilled by different PDU connectivity services provided via corresponding PDU sessions. According to 3GPP TR 23.501 [7], a specific PDU session makes use of a single network slice, and different PDU sessions may belong to different network slices.

### 4.9 Services using the Network Slice concept

### 4.9.1 Network Slices as NOP internals

Types of services listed in clause 4.7 are offered by CSPs to their customers, relying on Network Operator(s) network services. Depending on at least one of CSP requirements and Network Operator own policies, the Network Operator can decide to provide required network services using network slices. In such a case, only the Network Operator has knowledge of the existence of network slices; the CSP and its customers have not.

### 4.9.2 Network Slice as a Service

Network slice as a Service can be offered by CSPs to their customers, leaving the latter ones the possibility to offer their own services on top on network slice services (B2B2X). Such network slice services could be characterized by e.g.
- radio access technology,
- bandwidth,
- end-to-end latency,
- guaranteed / non-guaranteed QoS,
- security level, etc.

Depending on service offering, CSP imposes limits on the network slice characteristics that will be exposed to the CSC, and CSP imposes limits on the network slice management capabilities that will be exposed to the CSC.

A CSP offering Network Slices as a Service relies on network services offered by one or more network Operators.

### ---------- End of the extract----

### ---------- Extract from TR 28.801 [1] ---------

### 4.10 Network slice related management functions

The following management functions are needed to manage the NSIs to support communication services:
- Communication Service Management Function (CSMF):
   - Responsible for translating the communication service related requirement to network slice related requirements.
   - Communicate with Network Slice Management Function (NSMF).
- Network Slice Management Function (NSMF):
   - Responsible for management and orchestration of NSI.
   - Derive network slice subnet related requirements from network slice related requirements.
   - Communicate with the Network Slice Subnet Management Function (NSSMF) and Communication Service Management Function.
- Network Slice Subnet Management Function (NSSMF):
- Responsible for management and orchestration of NSSI.
- Communicate with the NSMF.

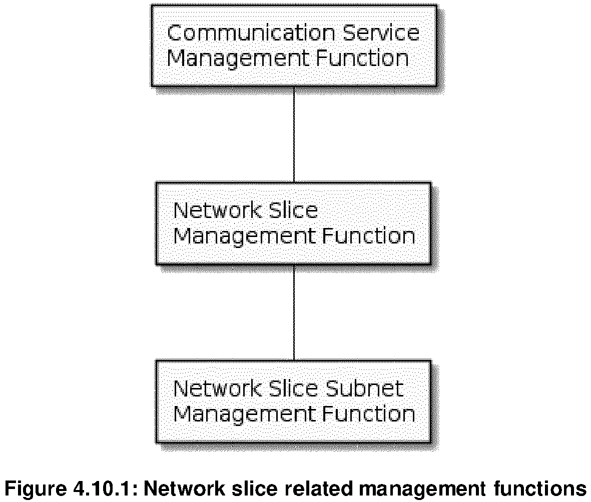

### ---------- End of the extract ----------

The service management is needed for all the services provided by the 5G system. Service management can be considered as responsible for analyzing the requirements of the customers, and performing service negotiation, service admission control and service mapping to internal management structures according to the service agreement.

According to current TR28.801 the CSMF is responsible for somewhat similar functionality but it is applicable only for providing a communication service. The service management functionalities for other types of services such as NSI as a service, NSSI as a service have not been identified.

Therefore, it is better to clearly define the service management functionality for all the service types and clarify the role of the CSMF in providing communication service.

This document proposes the slice service management function to have the following functionality for 5G network.
(a) Analyze the sliced service requests from a customer related to a network slice
(b) Perform sliced service negotiation
(c) Does sliced service feasibility check
(d) Map sliced service requests to internal service requirements according to the SLA.

These are the proposed functionality of the Slice Service Management Function for different service types.
- For a communication service, these internal service requirements are provided to CSMF and CSMF converts these to network slice requirements and provided to NSMF.
- For a NSI as a service, the internal service requirements reflects network slice requirements and sent to the the NSMF directly.
- For a NSI as a service, the internal service requirements reflects network slice subnet requirements and sent to the the NSSMF directly.
- This clarifies the role of the CSMF is to map the communications service requirements provided by the SM to the network slice requirements. CSMF still belong to the service management layer.

This contribution proposes to add the currently described key management functions in TR28.801 and the service management function to TS 28.800 [2].

### 4 DETAILED PROPOSAL

It is proposed to make the following changes to TR 28.800 [1].

### 7 POTENTIAL MANAGEMENT AND ORCHESTRATION ARCHITECTURE OPTIONS

### 7.1 Management functions of next generation networks and services

### 7.1.1 General

The following management functions are to be considered for supporting the management of the next generation networks and services:
- Network slice related management functions, see clause 4.9 of TR 28.801 [X]
   - Communication Service Management Function (CSMF)
   - Network Slice Management Function (NSMF)
   - Network Slice Subnet Management Function (NSSMF)
- 5G Network function management:
   - Fault Management (FM)
   - Performance Management (PM)
   - Configuration Management (CM)
   - Trace Management
   - MDT
   - SON(self-configuration/self-healing/ANR/MRO/ES/SWM)
   - EntryPoint management function (EPM)
- NFV-MANO (when the network function is built on virtualization environment)
- Service management function: The service management function is a management function involved in providing all the types of services to the customer to undertake the following responsibilities.
   - Negotiating with customer providing details of services that can be offered.
   - Finalizing the service requirements and provide the requirements of the business service to the appropriate management function:
      - for communication service, the communications service requirements to CSMF.
      - for NSI as a service, the NSI requirements to NSMF.
      - for NSSI as a service NSSI requirements to NSSMF.
   - Providing service related information to the customer according to service requirements.

Editor's Note 1: The list of network slice related management functions depends on the final output of TR 28.801 and needs revisiting later.
Editor's Note 2: Whether or not other management functions need to be added in the management and orchestration architecture is FFS.

There are four groups of objects which are necessary to be managed in the context of 5G network management:
- 5G services
- 5G slice instances
- 5G network functions
- Resources including virtual resources or non-virtual resources which support the 5G network

### 7.2 Management architecture of next generation networks and services

### 7.2.x Management architecture relation between Service management functions and slicing management functions

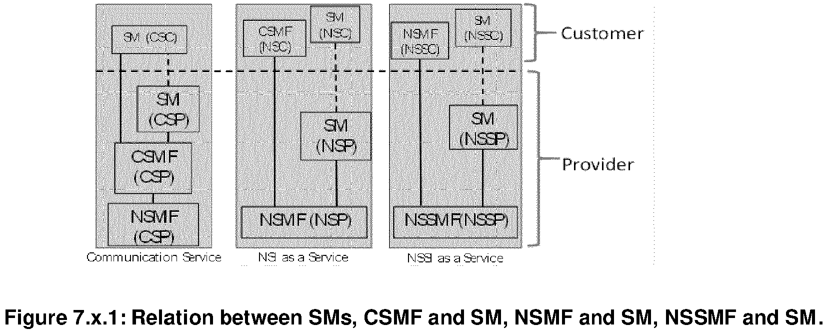

In Fig. 7.x.1, network management functions that used to support communication service are listed. SM is used to negotiate with customer' SM on the service requirements and charging policy. The service requirement can be communication service requirements (communication service), network slice requirements (network slice as a service) and network slice subnet requirements (network slice subnet as a service).

For communication service, service requirements can be delivered from SM to CSMF via an appropriate interface between SM and CSMF. For providing network slice as a service, after negation with SM of NSC, the SM of NSP delivers network slice requirement to NSMF of NSP via an appropriate interface. Similarly to providing network slice subnet as a service, the SM of NSSP delivers network slice subnet requirements to NSSMF of NSSP via an appropriate interface based on the negotiation results.

## Claims

1. A method of providing telecommunication communication services to a customer, comprising, at a communication service management function, CSMF, of a telecommunications service provider:
receiving (1010) an order in accordance with an agreement as to terms of a telecommunications service offering;
accessing (1020) network resources that satisfy the terms of the telecommunications service offering;
initializing (1030) an instance of the telecommunications service offering using the resources accessible thereby;
creating (1040) an interface by which the telecommunications service offering is made available to the customer; and
exposing (1050) the created interface to enable a management function of the customer to use the telecommunications service offering,
wherein the CSMF is coupled to and communicates with a network manager of a legacy operations support system, OSS.

2. The method according to claim 1, wherein the agreement is negotiated with the customer by a network service management function of the telecommunications service provider.

3. The method according to claim 2, wherein the network service management function of the telecommunications service provider receives directions from a business support system network management function as to the terms of the telecommunications service offering.

4. The method according to claim 2, further comprising: creating a first interface between the network service management function of the telecommunications service provider and a service management function of the customer.

5. The method according to claim 4, wherein the interface comprises at least one of a template request interface and a service requirement interface.

6. The method according to claim 5, wherein the template request interface specifies at least one telecommunications service offering selected from a group consisting of Communications as a Service, CaaS, Network Slice as a Service, NSaaS, Network Slice Subnet as a Service, NSSaaS and Infrastructure as a Service, laaS.

7. The method according to any one of claims 2 to 6, further comprising: creating a second interface between the network service management function of the telecommunications service provider and the network management function of the telecommunications service provider.

8. The method according to claim 7, wherein the second interface comprises at least one of a template request interface, a service requirement interface, a network requirement interface and a resource management interface.

9. The method according to any one of claims 1 to 8, further comprising: creating a third interface between the network management function of the customer and another management function to support at least one of a resource management and a lifecycle management function.

10. The method according to any one of claims 1 to 8, further comprising: creating a fourth interface between a network slice management function, NSMF, and at least one of a element manager, EM, management function, a domain manager, DM, management function and a management and orchestration, MANO management function.

11. The method according to claim 10, further comprising: performing interface conversion between the NSMF and the at least one of the EM management function, DM management function and MANO management function.

12. A network management function of a telecommunications service provider configured to perform the method of any one of claims 1 to 11.

13. A computer-readable medium comprising instructions which, when executed by an electronic device cause the electronic device to perform the method of any one of claims 1 to 11.

## Patentansprüche

1. Verfahren zum Bereitstellen von Telekommunikationskommunikationsdiensten für einen Kunden, das in einer Kommunikationsdienstmanagementfunktion, CSMF, eines Telekommunikationsdienstanbieters Folgendes umfasst:
Empfangen (1010) einer Bestellung gemäß einer Vereinbarung bezüglich Bedingungen eines Telekommunikationsdienstangebots;
Zugreifen (1020) auf Netzbetriebsmittel, die die Bedingungen des Telekommunikationsdienstangebots erfüllen;
Initialisieren (1030) einer Instanz des Telekommunikationsdienstangebots unter Verwendung der ihm zugänglichen Betriebsmittel;
Erstellen (1040) einer Schnittstelle, womit das Telekommunikationsdienstangebot für den Kunden verfügbar gemacht wird; und
Freilegen (1050) der erstellten Schnittstelle, um einer Managementfunktion des Kunden zu ermöglichen, das Telekommunikationsdienstangebot zu verwenden, wobei die CSMF an einen Netzmanager eines Altbetriebsunterstützungssystems, Alt-OSS, gekoppelt ist und mit ihm kommuniziert.

2. Verfahren nach Anspruch 1, wobei die Vereinbarung durch eine Netzdienstmanagementfunktion des Telekommunikationsdienstanbieters mit dem Kunden ausgehandelt wird.

3. Verfahren nach Anspruch 2, wobei die Netzdienstmanagementfunktion des Telekommunikationsdienstanbieters Anweisungen von einer Geschäftsunterstützungssystem-Netzmanagementfunktion hinsichtlich der Bedingungen des Telekommunikationsdienstangebots empfängt.

4. Verfahren nach Anspruch 2, das ferner Folgendes umfasst: Erstellen einer ersten Schnittstelle zwischen der Netzdienstmanagementfunktion des Telekommunikationsdienstanbieters und einer Dienstmanagementfunktion des Kunden.

5. Verfahren nach Anspruch 4, wobei die Schnittstelle eine Vorlagenanforderungsschnittstelle und/oder eine Dienstanforderungsschnittstelle umfasst.

6. Verfahren nach Anspruch 5, wobei die Vorlagenanforderungsschnittstelle mindestens ein Telekommunikationsdienstangebot festlegt, das aus einer Gruppe gewählt ist, die aus Kommunikationen als ein Dienst, CaaS, Netzabschnitt als ein Dienst, NSaaS, Netzabschnittunternetz als ein Dienst, NSSaaS und Infrastruktur als ein Dienst, laaS, besteht.

7. Verfahren nach einem der Ansprüche 2 bis 6, das ferner Folgendes umfasst: Erstellen einer zweiten Schnittstelle zwischen der Netzdienstmanagementfunktion des Telekommunikationsdienstanbieters und der Netzmanagementfunktion des Telekommunikationsdienstanbieters.

8. Verfahren nach Anspruch 7, wobei die zweite Schnittstelle eine Vorlagenanforderungsschnittstelle und/oder eine Dienstanforderungsschnittstelle und/oder eine Netzanforderungsschnittstelle und/oder eine Betriebsmittelmanagementschnittstelle umfasst.

9. Verfahren nach einem der Ansprüche 1 bis 8, das ferner Folgendes umfasst: Erstellen einer dritten Schnittstelle zwischen der Netzmanagementfunktion des Kunden und einer weiteren Managementfunktion, um ein Betriebsmittelmanagement und/oder eine Lebenszyklusmanagementfunktion zu unterstützen.

10. Verfahren nach einem der Ansprüche 1 bis 8, das ferner Folgendes umfasst: Erstellen einer vierten Schnittstelle zwischen einer Netzabschnittsmanagementfunktion, NSMF, und einer Elementmanagermanagementfunktion, EM-Managementfunktion, und/oder einer Domänenmanagermanagementfunktion, DM-Managementfunktion, und/oder einer Management- und Instrumentierungs-Managementfunktion, MANO-Managementfunktion.

11. Verfahren nach Anspruch 10, das ferner Folgendes umfasst: Durchführen einer Schnittstellenumsetzung zwischen der NSMF und der EM-Managementfunktion und/oder der DM-Managementfunktion und/oder der MANO-Managementfunktion.

12. Netzmanagementfunktion eines Telekommunikationsdienstanbieters, die konfiguriert ist, das Verfahren nach einem der Ansprüche 1 bis 11 durchzuführen.

13. Computerlesbares Medium, das Befehle enthält, die, wenn sie durch eine elektronische Vorrichtung ausgeführt werden, bewirken, dass die elektronische Vorrichtung das Verfahren nach einem der Ansprüche 1 bis 11 durchführt.

## Revendications

1. Procédé de fourniture de services de communication par télécommunication à un client, comprenant, au niveau d'une fonction de gestion de services de communication (CSMF) d'un fournisseur de services de télécommunications, les étapes consistant à :
recevoir (1010) une commande selon un contrat concernant les conditions d'une offre de services de télécommunications ;
accéder (1020) à des ressources de réseau qui satisfont aux conditions de l'offre de services de télécommunications ;
initialiser (1030) une instance de l'offre de services de télécommunications au moyen des ressources ainsi accessibles ;
créer (1040) une interface par laquelle l'offre de services de télécommunications est rendue disponible au client ; et
exposer (1050) l'interface créée pour permettre à une fonction de gestion du client d'utiliser l'offre de services de télécommunications,
la CSMF étant couplée à un gestionnaire de réseau d'un système d'assistance d'opérations (OSS) existant et communiquant avec celui-ci.

2. Procédé selon la revendication 1, dans lequel le contrat est négocié avec le client par une fonction de gestion de services de réseau du fournisseur de services de télécommunications.

3. Procédé selon la revendication 2, dans lequel la fonction de gestion de services de réseau du fournisseur de services de télécommunications reçoit des instructions en provenance d'une fonction de gestion de réseau de système d'assistance commerciale concernant les conditions de l'offre de services de télécommunications.

4. Procédé selon la revendication 2, comprenant en outre l'étape consistant à : créer une première interface entre la fonction de gestion de services de réseau du fournisseur de services de télécommunications et une fonction de gestion de services du client.

5. Procédé selon la revendication 4, dans lequel l'interface comprend une interface de demande de modèle et/ou une interface d'exigence de service.

6. Procédé selon la revendication 5, dans lequel l'interface de demande de modèle spécifie au moins une offre de services de télécommunications choisie dans un groupe constitué de communications en tant que service (CaaS), d'une tranche de réseau en tant que service (NSaaS), d'un sous-réseau de tranche de réseau en tant que service (NSSaaS) et d'une infrastructure en tant que service (IaaS).

7. Procédé selon l'une quelconque des revendications 2 à 6, comprenant en outre l'étape consistant à : créer une deuxième interface entre la fonction de gestion de services de réseau du fournisseur de services de télécommunications et la fonction de gestion de réseau du fournisseur de services de télécommunications.

8. Procédé selon la revendication 7, dans lequel la deuxième interface comprend au moins une interface parmi une interface de demande de modèle, une interface d'exigence de service, une interface d'exigence de réseau et une interface de gestion de ressources.

9. Procédé selon l'une quelconque des revendications 1 à 8, comprenant en outre l'étape consistant à : créer une troisième interface entre la fonction de gestion de réseau du client et une autre fonction de gestion pour prendre en charge une fonction de gestion de ressources et/ou une fonction de gestion de cycle de vie.

10. Procédé selon l'une quelconque des revendications 1 à 8, comprenant en outre l'étape consistant à : créer une quatrième interface entre une fonction de gestion de tranche de réseau (NSMF) et au moins une fonction parmi une fonction de gestion de gestionnaire d'élément (EM), une fonction de gestion de gestionnaire de domaine (DM) et une fonction de gestion de module de gestion et d'orchestration (MANO).

11. Procédé selon la revendication 10, comprenant en outre l'étape consistant à : réaliser une conversion d'interface entre la NSMF et l'au moins une fonction parmi la fonction de gestion d'EM, la fonction de gestion de DM et la fonction de gestion de MANO.

12. Fonction de gestion de réseau d'un fournisseur de services de télécommunications, configurée pour réaliser le procédé selon l'une quelconque des revendications 1 à 11.

13. Support lisible par ordinateur comprenant des instructions qui, lorsqu'elles sont exécutées par un dispositif électronique, amènent le dispositif électronique à réaliser le procédé selon l'une quelconque des revendications 1 à 11.
